# EUROPÄISCHE PATENTSCHRIFT

(11) **EP 1 714 063 B1**
(45) Veröffentlichungstag und Bekanntmachung des Hinweises auf die Patenterteilung: **10.12.2008**
(21) Anmeldenummer: 05701252.8
(22) Anmeldetag: 29.01.2005
(51) Int. Cl.: F16K 27/00, F16K 11/22, F15B 13/00

(54) **VERTEILERVORRICHTUNG FÜR VENTILE**
DISTRIBUTOR DEVICE FOR VALVES
DISPOSITIF DE DISTRIBUTION POUR SOUPAPES

(30) Priorität: 12.02.2004 DE 102004006889
(43) Veröffentlichungstag der Anmeldung: 25.10.2006
(73) Patentinhaber: GEA Tuchenhagen GmbH, 21514 Büchen (DE)
(72) Erfinder: WIEDENMANN, Willi, 73469 Riesbürg (DE); LEIDINGER, Wilhelm, 67661 Kaiserslautern (DE); SCHMID, Werner, 89522 Heidenheim (DE); SAUER, Martin, 86687 Kaisheim (DE); WENGERT, Holger, 73441 Bopfingen (DE)
(86) Internationale Anmeldenummer: PCT/EP2005/000888
(87) Internationale Veröffentlichungsnummer: WO 2005/078323

(56) Entgegenhaltungen:
- EP-A- 0 979 964
- DE-A1- 2 430 030
- FR-A- 2 663 711
- US-A- 5 441 079
- US-A- 6 112 767

## Beschreibung

### TECHNISCHES GEBIET

Die Erfindung betrifft eine Verteilervorrichtung zum Anschluss von mindestens zwei Ventilen, insbesondere Absperrventile für sterile verfahrenstechnische Prozessabläufe, in denen jeweils ein translatorisch verschiebbares Schließglied vorgesehen ist, das eine Sitzfläche mit einem Durchtrittsquerschnitt schaltet, mit einem Innenraum in einem Gehäuse der Verteilervorrichtung, der Anschlussöffnungen aufweist, die jeweils den Innenraum mit dem jeweiligen Durchtrittsquerschnitt des zugeordneten, angeschlossenen Ventils verbinden, wobei die Anschlussöffnungen an bestimmten Stellen der Erstreckungslänge und des Umfangs des Gehäuses angeordnet sind, wobei die Sitzfläche am Gehäuse ausgebildet ist und unmittelbar in die zugeordnete Anschlussöffnung übergeht, und wobei ein Ventilgehäuse des jeweils angeschlossenen Ventils mit dem Gehäuse stoffschlüssig verbunden ist.

### STAND DER TECHNIK

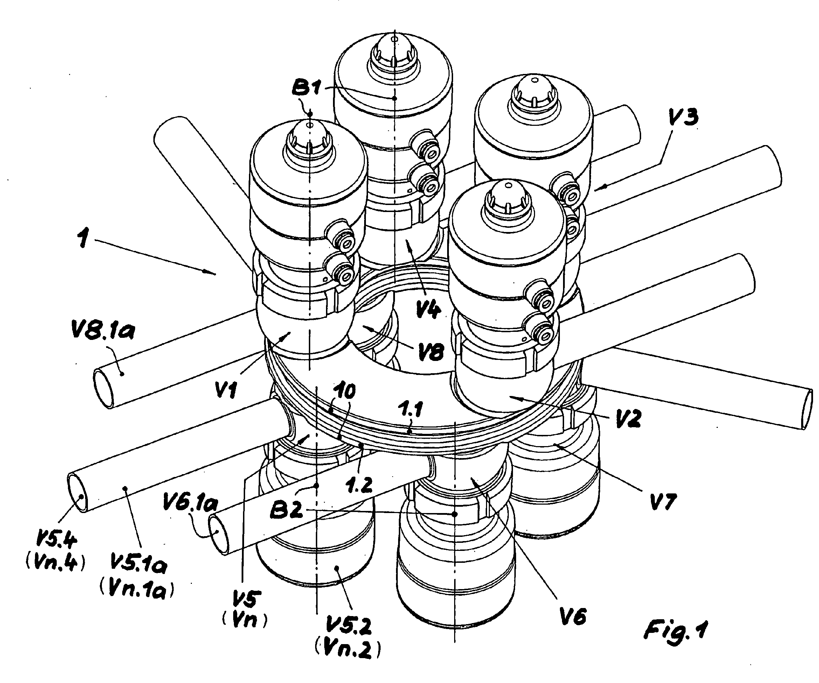

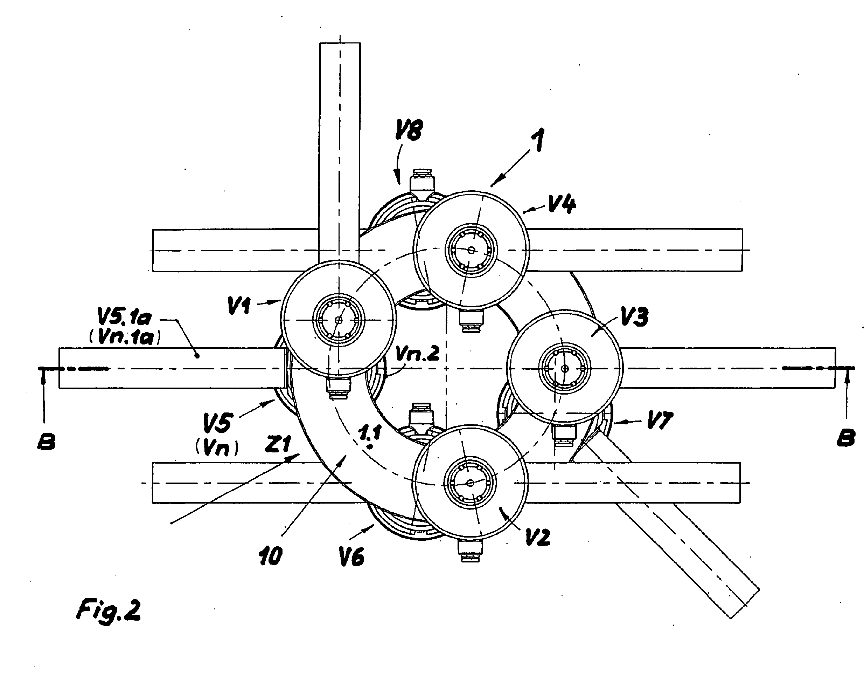

Eine Verteilervorrichtung der gattungsgemäßen Art ist aus der US 5,441,079 bekannt. Dieses Dokument offenbart in **Figur 1** ein System von sich in parallelen Ebenen kreuzenden Zufuhr- und Abfuhr-Rohrleitungen, die gemäß der dortigen **Figur 2** an den jeweiligen Kreuzungsstellen über eine aus wenigstens zwei Ventilen bestehende Ventilanordnung wahlweise miteinander verbunden werden können. Die Ventilanordnungen in einer den Kreuzungsstellen entsprechenden Anzahl bilden hier die Verteilervorrichtung, wobei an jeder Kreuzungsstelle ein Gehäuse erforderlich ist.

In Rohrleitungssystemen verfahrenstechnischer Prozessabläufe, insbesondere in der Pharmazie und Biotechnologie, werden sterile Anwendungen gefordert. Dies bedeutet, dass die in diesen Rohrleitungssystemen zum Einsatz kommenden Ventile bestimmte Eigenschaften aufweisen müssen, die sie für diese sterilen Anwendungen befähigen. Bei Ventilen, in denen jeweils ein translatorisch verschiebbares Schließglied eine Sitzfläche schaltet, ist beispielsweise die das Schließglied betätigende Ventilstange im Bereich ihrer Durchführung durch das Ventilgehäuse zum jeweiligen Antrieb ein kritischer Bereich, da an dieser Stelle durch die Ventilstangenbewegung (sog. Fahrstuhleffekt) ggf. Keime aus der Umgebung in das Produkt verschleppt werden können und somit eine sterile Anwendung in Frage gestellt ist. Darüber hinaus wird ggf. ein an der Ventilstange haftender Produktfilm durch die Schaltbewegung in den Dichtungsbereich oder darüber hinaus transportiert und dort mit Keimen aus der Umgebung kontaminiert. Dieser kontaminierte Produktfilm wird dann durch die Schaltbewegung der Stange ggf. in den Produktraum verbracht und führt unter Umständen durch sog. Rekontamination zu einer Beeinträchtigung des dort anstehenden Produktes.

Um diese unerwünschten, die sterilen Anwendungen gefährdenden Mechanismen an der Durchführung der Ventilstange durch das Ventilgehäuse zu vermeiden, werden in einem Teil der Anwendungsfälle entweder Membranventile oder auch geeignete Hubventile eingesetzt, wobei bei letzteren die jeweilige Durchführung mittels eines das Ventilgehäuse mit dem Schließglied verbindenden Faltenbalges, Wellrohres oder einer hauptsächlich zweidimensionalen, flächigen Membran **(**EP 0 332 806 B1**)** überbrückt ist.

Bei einem Membranventil, wie es beispielsweise aus der DE 199 83 997 T1 oder der US 5,273,075 bekannt ist, verschließt eine Membran Strömungspfade innerhalb eines Ventilkörpers, die dort zwischen einem Einlass und einem Auslass ausgebildet sind. Die Membran ist in dem Ventilkörper eingespannt und wird durch einen Bewegungsmechanismus in vertikaler Richtung bewegt. Die Strömungspfade des Ventilkörpers stehen miteinander durch einen vorsprungsfreien Verbindungspfad in Verbindung, wobei die Membran sich eng an den Verbindungspfad anschmiegt, wenn sie abgesenkt ist, um den Strömungspfad zu verschließen, und dann, wenn sie angehoben ist, den Strömungspfad zu öffnen. Der Vorteil eines derartigen Membranventils besteht insbesondere darin, dass das die Membran bewegende Schaltglied außerhalb des Produktraumes angeordnet ist und der Produktraum gegenüber der äußeren Umgebung durch die statisch im Ventilkörper eingespannte Membran getrennt ist. Nachteilig bei derartigen Membranventilen ist, dass sie deutlich größere Sitzbereichquerschnitte als Anschlussquerschnitte aufweisen. Darüber hinaus sind derartige Membranventile rein äußerlich daran zu erkennen, dass sie im Vergleich zum Ventilkörper mit einem relativ groß dimensionierten Antrieb bestückt sind. Durch das Missverhältnis zwischen Sitzbereichquerschnitt und Anschlussquerschnitten entstehen in den jeweiligen Übergangsbereichen Toträume und/oder nicht hinreichend durchströmte Bereiche, die eine einwandfreie Reinigung im Durchfluss zumindest erschweren.

Dem Einbau der Membranventile der in Rede stehenden Art in waagerechten Rohrleitungen muss insoweit besondere Aufmerksamkeit geschenkt werden, als die vom Hersteller empfohlenen Einbauwinkel unbedingt beachtet werden müssen, um eine einigermaßen vertretbare Restentleerung zu erreichen. Allerdings sind diese Einbauwinkel in Abhängigkeit vom Hersteller, Ventiltyp und Nenngröße unterschiedlich, was in der Regel mit einem größeren Planungsaufwand verbunden ist. Bei Membranventilen in T-Bauform ist die Problematik des Leerlaufens besonders relevant, da es hier bei ungünstiger Einbaulage zu einer sog. Sumpfbildung zwischen der Membran und dem membrannahen Ventilgehäuse im Bereich der Sitzfläche kommen kann.

Auch mit Blick auf Verrohrungsaspekte ist die Verwendung der in Rede stehenden Membranventile nicht unproblematisch. Anlagensysteme bestehen aus vertikalen und horizontalen Rohrleitungen. Beim Anlagen-Engineering bestimmen Platzverhältnisse und verfahrenstechnische Hintergründe die Positionierung und Einbaulage des Ventils. Wird beispielsweise ein Membranventil in einer vertikalen Leitung installiert, ist bei der Weiterführung in die horizontale Ebene ein 90 Grad-Bogen erforderlich, was einen zusätzlichen Aufwand bedeutet.

Ein weiterer Aspekt, der bei der Auswahl des Ventiltyps (Membranventil oder faltenbalg- bzw. membrangedichtetes Hubventil mit Schließglied) zum Tragen kommt, ist die Anlagenverfügbarkeit, die u.a. durch die Standzeit der hochbeanspruchten Ventilbauteile bestimmt ist, nämlich der Membran bei Membranventilen einerseits oder der Sitzdichtungen und/oder des Faltenbalgs bei Hubventilen andererseits. Hubventile unterliegen einem mehr oder weniger überschaubaren, planmäßigen Verschleiß, bei Membranventilen ist dieser Verschleiß und/oder Alterungsprozess nicht so einfach zu erfassen und daher werden diese Membrane nach einem gewissen Einsatzzeitraum vorbeugend ausgetauscht. Dabei hängt die Standzeit der Membrane von den jeweiligen Prozessparametem ab. Neben der Einwirkung von aggressiven Medien, der Temperatur bei Reinigung und Sterilisation, den Prozessdrücken und den Strömungsprofilen bestimmt die permanente Verformung beim Schalten in erster Linie die Standzeit und damit die Lebensdauer einer Membrane. Häufig werden Membrane weniger durch den Prozess als durch die ihnen auferlegte mechanische Walkarbeit geschädigt. Daher gilt für alle Membranen die Tatsache als kritisch, dass ein Verschleiß (angegriffene Oberfläche/Partikelabtrag auf der Medienseite) von außen in der Regel nicht sichtbar ist. Zur Vermeidung eines gestörten Prozessablaufs durch Membrandefekt mit der Gefahr von Reinfektionen erfolgt daher in der Praxis ein präventiver Wechsel der Membranen, häufig relativ frühzeitig. Aus einem präventiven Membranwechsel resultieren hohe Betriebskosten durch entsprechende Wartungsarbeiten und Anlagenstillstandszeiten.

Bei der Ausgestaltung der Rohrleitungssysteme für verfahrenstechnische Prozessabläufe ist es erforderlich, Leitungen für unterschiedliche Medien miteinander zu verbinden. Dies geschieht mit sog. Verteilersystemen, in denen beispielsweise sog. Steril-Ventilblöcke vorgesehen werden (s. beispielsweise US 6,112,767**),** an die eine Vielzahl beispielsweise der vorstehend beschriebenen Membranventile anschließbar sind. Die Ventilblöcke besitzen eine im Wesentlichen kubische Raumform, wobei beispielsweise an jeder Blockhälfte vier bis sechs Membranventile anschließbar sind. Ein einziger Ventilblock beinhaltet die Ventilkörper der angeschlossenen Membranventile mit ihren jeweiligen Strömungspfaden, deren Ventilsitze, die Anschlussgeometrie und die notwendigen Querverbindungen. Nachteilig bei einem derartigen Verteilersystem ist ihre mangelnde Flexibilität, da die Anzahl an den Ventilblock anschließbarer Membranventile durch die jeweilige Blockgeometrie determiniert ist. In der Regel werden derartige Verteiler entsprechend der Anforderungen und der daraus resultierenden Anzahl von Membranventilen ausgewählt. Eine Erweiterung ist nicht möglich, wenn alle Anschlussmöglichkeiten ausgeschöpft sind. Da derartige Ventilblöcke aufgrund ihrer aufwändigen Konstruktion relativ teuer sind, werden in der Regel auch keine Ausbaureserven vorgesehen. Abgesehen davon, dass derartige Systeme relativ lange Lieferfristen aufweisen, da sie oftmals auftragsgebunden gefertigt werden müssen und nicht als Lagerware zur Verfügung stehen, sind sie aufgrund der vorstehend erwähnten Querschnittsproblematik und ihrer aufwändigen Bauform nicht hundertprozentig totraumfrei, sie besitzen ungenügende Leeriaufeigenschaften und eine eingeschränkte sog. CIP/SIP-Reinigung (CIP: cleaning in place; SIP: sterilisation in place).

Neben den vorgenannten Steril-Ventilblöcken sind auch Verteilerbäume (sog. Linearverteiler) und aus Rohrformteilen zusammengeschweißte andere Verteilergeometrien, insbesondere Ringvergteiler, bekannt. Auch diese Verteilersysteme weisen wenigstens einen Teil der vorstehend beschriebenen Nachteile der Steril-Ventilblöcke auf und darüber hinaus weitere Nachteile, die sich aus der Herstellung und den Eigenschaften der regelmäßig in einer Vielzahl vorliegenden Schweißnähte ergeben.

Eine Alternative zu den vorstehend beschriebenen Membranventilen bilden Hubventile für sterile Anwendungen, in denen jeweils ein translatorisch verschiebbares Schließglied eine Sitzfläche mit kreisförmigem Durchtrittsquerschnitt schaltet, wobei die Durchführung der das Schließglied betätigenden Ventilstange durch das Ventilgehäuse mittels eines zwischen Schließglied und Ventilgehäuse angeordneten und an diesen Stellen befestigten Faltenbalges oder Wellrohres überbrückt wird (Firmendruckschrift **GEA Tuchenhagen,** Büchen, DE, STERICOM^{®} Aseptik-Ventile, 618d-061). Bei derartigen Ventilen und vor allem bei weiterentwickelten Sterilventilen, die aus dieser bekannten Ventilbauart hervorgegangen sind und im Zusammenhang mit der dieser Erfindung zugrunde liegenden Verteilervorrichtung Anwendung finden, lassen sich die Anschlussquerschnitte und der Durchtrittsquerschnitt im Sitzbereich gleichgroß ausführen und die Innenräume der Ventile sind totraumfrei und ohne Dome und Sümpfe ausgestaltet. Die Ventile besitzen eine äußerst kompakte Bauform und erfordern einen geringen Platzbedarf. Sie stellen ein vollständiges Leerlaufen des Ventilgehäuses in waagerechten Rohrleitungen sicher und sie besitzen einen Faltenbalg als Absperrelement aus PTFE (Polytetrafluorethylen) für universelle Anwendungen, der sich durch eine hohe Standzeit auszeichnet und der über eine hermetisch sichere und dauerhafte ventilgehäuseseitige Abdichtung verfügt. Das weiterentwickelte Sterilventil ist sicher im Durchfluss zu reinigen durch eine strömungsoptimierte Innenraumkontur und der Austausch des einzigen Verschleißteiles, nämlich des Schließgliedes in Verbindung mit dem Faltenbalg, ist außerordentlich einfach.

Die vorstehend kurz dargestellten, als Hubventile arbeitenden Sterilventile finden in Mehrfachanordnung in komplexen Prozessen mit verschiedenen Betriebs-, Reinigungs- und Sterilisationsmedien, vor allem in der Pharmazie und Biotechnologie, Anwendung. Die für normale Hubventile zur Verfügung stehenden bekannten Verteilersysteme stellen eine bislang unbefriedigende oder vielfach auch ungeeignete Alternative zu den vorstehend kurz beschriebenen Steril-Ventilblöcken für Membranventile dar. Die bekannten Verteilersysteme können mit Blick auf den notwendigen einfachen Aufbau, die erforderliche Kompakt- und Totraumfreiheit sowie Reinigungsfreundlichkeit mit den weiterentwickelten Sterilventilen nicht mithalten und sind, wenn diese Verteilersysteme als Integrationsmittel für diese in Rede stehenden Sterilventile zur Anwendung kommen sollen, eher kontraproduktiv.

Aus der WO 021066593 A1 ist eine Vorrichtung zum Betrieb von Tanklagersystemen im festverrohrten Verbund mit Rohrsystemen für Flüssigkeiten bekannt, insbesondere zur Anwendung in hohen mikrobiologischen Qualitätsanforderungen unterliegenden Anlagen zur Produktbearbeitung und zum Produkttransfer in der Nahrungsmittel- und Getränkeindustrie, der Pharmazie und der Biotechnologie, die einen aus einem Tankboden des jeweiligen Tanks ausmündenden Ventilverteilerbaum aufweist, der als langgestreckter Hohlkörper ausgebildet ist, der im Wesentlichen senkrecht orientiert ist und der Anschlussöffnungen zum Verbinden seines Innenraum mit jeder der an den Verteilerbaum herangeführten Rohrleitungen besitzt. Jeder dieser Anschlussöffnungen ist ein in seinem Sitzbereich vermischungssicher ausgestaltetes Ventil zugeordnet, das die Verbindung zwischen dem Innenraum und der jeweils angeschlossenen Rohrleitung in unmittelbarer Nähe zum Hohlkörper schaltet.

Die bekannte Verteilervorrichtung selbst ist weitestgehend totraumfrei ausgebildet und sie besitzt auch hinreichende Leerlaufeigenschaften, da sie im Wesentlichen senkrecht orientiert ist. Die überwiegend waagerecht angeordneten Ventile können hinsichtlich ihres Leerlaufens problematisch sein, da, bauartbedingt, oftmals geringe Restmengen im Sitzbereich verbleiben können. Alles in allem handelt es sich bei der bekannten Verteilervorrichtung um einen sog. Linearverteiler, der, um die angestrebten Eigenschaften in Verbindung mit dem Tankauslauf sicherzustellen, im Wesentlichen senkrecht angeordnet werden muss. Die senkrechte Anordnung schränkt allerdings seine Anwendung sehr stark ein, sodass diese bekannte Lösung kein Vorbild für ein flexibles, universell einsetzbares, sterile Anwendungen ermöglichendes Verteilersystem für Ventile, die gleichfalls höchsten hygienischen und sterilen Anforderungen genügen müssen, darstellt.

Es ist Aufgabe der vorliegenden Erfindung, eine Verteilervorrichtung der gattungsgemäßen Art zu schaffen, die in ihrem Aufbau einfach, kompakt, totraumfrei und reinigungsfreundlich ausgestaltet ist und sich restlos entleeren lässt.

### ZUSAMMENFASSUNG DER ERFINDUNG

Diese Aufgabe wird durch eine Verteilervorrichtung mit den Merkmalen des Anspruchs 1 gelöst. Zwei vorteilhafte Ausführungsformen werden in Unteranspruch 2 oder 7 beansprucht, wobei deren vorteilhafte Ausgestaltungen in den jeweils folgenden Unteransprüchen beschrieben sind. Vorteilhafte Ausgestaltungen der beiden bevorzugten Ausführungsformen sind Gegenstand der Unteransprüche 12 bis 18. Die Herstellung der erfindungsgemäßen Verteilervorrichtungen ist Gegenstand der Ansprüche 19 und 20.

Der eine erfinderische Grundgedanke besteht darin, dass mit Blick vor allem auf den Innenraum der vorgeschlagenen Verteilervorrichtung ein Gehäuse vorgesehen ist, das aus zwei geometrisch sehr einfachen Gehäuseteilen besteht, die stoffschlüssig miteinander verbunden sind. Dies ist ein Vorteil gegenüber den bekannten Vorrichtungen, die vor allem innenseits als komplexe räumliche Gebilde innerhalb eines Ventilblockes oder als langgestreckter Linearverteiler mit vorzugsweise senkrechter Orientierung und totraumbehafteten Abzweigungen für die anzuschließenden Ventile ausgeführt sind. Die erfindungsgemäßen Gehäuseteile weisen jeweils eine Kanalausnehmung auf, die in komplementärer Anordnung den Innenraum des Verteilergehäuses in Form eines ersten oder zweiten Kanals begrenzen. Die notwendigen Anschlussöffnungen, die jeweils den Innenraum mit dem jeweiligen Durchtrittsquerschnitt des zugeordneten angeschlossenen Ventils verbinden, lassen sich an bestimmten, weitgehend frei festlegbaren Stellen der Erstreckungslänge und des Umfangs der Gehäuseteile anordnen. Ihre Lage und Anzahl ergibt sich aus dem jeweils vorliegenden verfahrenstechnischen Anforderungsprofil.

Ein weiterer und entscheidender erfinderischer Grundgedanke besteht darin, dass das angeschlossene Ventil die Sitzfläche für sein Schließglied im eigenen Ventilgehäuse sozusagen verliert und diese Sitzfläche am in Frage kommenden Gehäuseteil der Verteilervorrichtung ausgebildet ist und unmittelbar in die zugeordnete Anschlussöffnung übergeht. Darüber hinaus ist konsequent und folgerichtig das Ventilgehäuse des jeweils angeschlossenen Ventils mit dem zugeordneten Gehäuseteil in äußerst kurzem Abstand stoffschlüssig verbunden.

Durch diese erfindungsgemäße Ausgestaltung der Verteilervorrichtung wird die der Erfindung zugrunde liegende Aufgabe mit allen ihren Teilaspekten in eindrucksvoller Weise gelöst. Durch die stoffschlüssige Verbindung der zur Verteilervorrichtung gehörenden Gehäuseteile miteinander sind zur Ausbildung des als Kanal ausgebildeten Innenraumes keinerlei zusätzliche Dichtungen erforderlich. Das Gleiche gilt für die Verbindung zwischen der Verteilervorrichtung und den angeschlossenen Ventilen. Die einzige zu realisierende Abdichtung besteht nur noch zwischen dem Schließglied des Ventils einerseits und der in die Verteilervorrichtung hinein verlagerten Sitzfläche andererseits, und zwar durch das Schließglied selbst. Dieses besteht vorzugsweise aus PTFE (Polytetrafluorethylen) und ist in Verbindung mit dem Faltenbalg einstückig ausgeführt. Durch die Integration der Sitzfläche in die Verteilervorrichtung lässt sich das Ventilgehäuse unmittelbar an letzterer stoffschlüssig, vorzugsweise durch Schweißung, anschließen, sodass in diesem Bereich keine zusätzlichen Toträume entstehen.

Vielmehr ist der Verbindungsbereich zwischen Ventilgehäuse und Verteilervorrichtung in unmittelbarer Nachbarschaft zur Sitzfläche, geometrisch gesehen, weitestgehend entsprechend dem Ventilgehäuse im Bereich seiner Sitzfläche ausgeführt, wenn dieses Ventilgehäuse eigenständig und, für sich gesehen, voll funktionsfähig im Rahmen eines Sterilventils fungiert.

Eine erste vorteilhafte Ausführungsform der vorgeschlagenen Verteilervorrichtung sieht vor, den ersten Kanal als in sich geschlossenen Ringkanal auszuführen, der eine denkbar einfache Geometrie in Form eines Drehkörpers aufweist. Dabei entsteht der Ringkanal durch Rotation einer erzeugenden, ebenen ersten Fläche um eine Drehachse, die die Fläche nicht schneidet.

Eine einfache, kompakte, totraumfreie und reinigungsfreundliche Geometrie des Kanalinnenraumes des Ringkanals wird gemäß einem weiteren Vorschlag dadurch erreicht, dass die erzeugende erste Fläche im Wesentlichen rechteckförmig ist, definiert durch eine erste Breite und eine erste Tiefe. Zum Zwecke einer strömungsoptimierten Innenraumkontur, die reinigungsfreundlich ist und Ablagerungen und Rückständen wenig Ansatzpunkte bietet und die auch die in vielen Fällen gewünschte Elektropolierfähigkeit besitzt, wird weiterhin vorgeschlagen, dass die Ecken der ersten Fläche abgerundet sind.

Wenn die Drehachse parallel zur kurzen Seite der ersten Fläche, der ersten Tiefe, verläuft und einen Abstand vom Schwerpunkt der ersten Fläche hat, der einem halben mittleren Durchmesser des Ringkanals entspricht, dann entsteht durch diese Konfiguration eine Geometrie, die an den beiden Stirnseiten der Verteilervorrichtung einerseits ausreichend Fläche für die Anordnung der Anschlussöffnungen sicherstellt und die andererseits durch den frei zu wählenden mittleren Durchmesser des Ringkanals Bauraum schafft, für eine Vielzahl beiderseits der Verteilervorrichtung anzuordnender Ventile. Wird, wie dies weiterhin vorgeschlagen wird, eine erste Teilungsebene so angeordnet, dass das erste und das zweite Gehäuseteil die erste Fläche senkrecht zur Drehachse mittig teilen, dann weisen die beiden Gehäuseteile kongruente Formen auf, was zu einer Reduzierung der Teilevielfalt und damit der Herstellkosten führt.

Die einfache Geometrie des Ringkanals und seine gute Zugänglichkeit, gesehen über seinen auf die Drehachse bezogenen Umfang und über die Berandung der erzeugenden ersten Fläche, ermöglichen eine sehr variable und anzahlmäßig großzügige Anordnung von Anschlussöffnungen, über die der Innenraum des Ringkanals mit dem jeweiligen Durchtrittsquerschnitt der angeschlossenen Ventile wahlweise zu verbinden ist. Die Scheibengeometrie der Gehäuseteile ermöglicht es, die Anschlussöffnungen sowohl an der stirnseitigen Außenseite des ersten Gehäuseteils als auch an der stirnseitigen Außenseite des zweiten Gehäuseteils am Ringkanal anzuordnen. Dadurch ist über den gesamten, auf die Drehachse bezogenen Umfang des Ringkanals und an jeder stirnseitigen Außenseite des jeweiligen Gehäuseteils eine Anordnung von Ventilen bis zur dichtestmöglichen Teilungsanordnung möglich, die in der Regel durch die Durchmesser der Antriebszylinder benachbarter Ventile determiniert ist.

Eine zweite vorteilhafte Ausführungsform der vorgeschlagenen Verteilervorrichtung sieht vor, dass der zweite Kanal als Linearkanal ausgebildet ist, der durch Translation einer erzeugenden, ebenen Fläche senkrecht zu dieser Fläche entsteht. Ein sog. Linearverteiler kann beispielsweise dann in einer Anlage zur Anwendung kommen, wenn die räumlichen Voraussetzungen beispielsweise die Anordnung des vorstehend beschriebenen sog. Ringverteilers nicht erlauben. Darüber hinaus hat ein Linearverteiler ggf. strömungstechnische Vorteile, da eine diesem Linearverteiler zugeführte Strömung nicht, wie beispielsweise beim Ringverteiler, verzweigt werden muss.

Eine besonders vorteilhafte Kontur des Kanalinnenraumes des Linearkanals wird, in gleicher Weise wie beim Ringkanal, dann erreicht, wenn die erzeugende zweite Fläche im Wesentlichen rechteckförmig ist, definiert durch eine zweite Breite und eine zweite Tiefe. Hinsichtlich der Eckenabrundung der erzeugenden zweiten Fläche, der senkrecht zur kurzen Seite der zweiten Fläche angeordneten zweiten Teilungsebene und der mittigen Teilung der zweiten Fläche durch diese zweite Teilungsebene werden die diesbezüglichen Vorschläge im Zusammenhang mit dem Ringkanal sinngemäß übernommen, wodurch die mit diesen Vorschlägen erreichbaren Vorteile in adäquater Weise auch dem Linearverteiler zuteil werden.

Sowohl beim Ring- als auch beim Linearverteiler werden die Gehäuseteile in vorteilhafter Weise bevorzugt durch Schweißung stoffschlüssig miteinander verbunden. Beim Ringverteiler handelt es sich dabei vorteilhaft um eine maschinelle Orbitalschweißung von außen und auch beim Linearverteiler können die überwiegend linearen Schweißnähte maschinell ausgeführt werden, sodass in jedem Falle eine sicheres Durchschweißen der Wandung der Gehäuseteile mit einwandfreier Wurzelqualität sichergestellt ist.

Die Anordnung der Bohrungsachse der jeweiligen Anschlussöffnung wird gemäß einem weiteren Vorschlag so gewählt, dass diese Bohrungsachse senkrecht auf der jeweiligen Teilungsebene steht. Sowohl beim Ring- als auch beim Linearkanal stehen dadurch für die Durchdringung mit den Anschlussöffnungen einander gegenüberliegende Begrenzungsflächen zur Verfügung, die frei sind von Verbindungsnähten der stoffschlüssigen Verbindung, vorzugsweise frei von Schweißnähten.

Eine optimale Anordnung der Anschlussöffnungen in Bezug auf den Durchtrittsquerschnitt des Ring- bzw. Linearkanals ist dann gegeben, wenn die jeweilige Bohrungsachse die lange Seite der erzeugenden Fläche, die Breite, mittig durchdringt. In diesem Falle wird eine optimale Sitzgeometrie in Verbindung mit dem Übergang zur zugeordneten Anschlussöffnung dann in besonderer Weise erreicht, wenn der Durchtrittsquerschnitt der Sitzfläche kreisförmig ausgeführt ist und den gleichen Durchmesser aufweist, wie die zugeordnete kreisförmige Anschlussöffnung.

Mit Blick auf die erfindungsgemäß angestrebte totraumfreie, sumpf- und domfreie Innenraumausgestaltung ist es weiterhin zielführend, wenn neben den vorstehend zu realisierenden Durchmesserverhältnissen die Breite der jeweils erzeugenden Fläche etwa um den zweifachen Abrundungsradius der Ecken dieser Fläche größer als der Durchmesser der Anschlussöffnung und damit des Durchtrittsquerschnitts der Sitzfläche ausgeführt ist.

Eine weitere vorteilhafte Ausgestaltung der vorgeschlagenen Verteilervorrichtung sieht vor, dass die Anschlussöffnung über die zugeordnete Sitzfläche jeweils in einem Verteileranschluss endet, ausgebildet an der jeweiligen Außenseite des ersten Gehäuse- oder des zweiten Gehäuseteils, soweit es sich um den Ringkanal handelt, oder des dritten Gehäuse- oder des vierten Gehäuseteils, soweit es sich um den Linearkanal handelt. Der jeweilige Verteileranschluss ist in Form eines sehr kurzen Rohrstutzens ausgeführt. Mit diesem ist, gemäß einem weiteren Vorschlag, ein komplementärer, durchmesser- und abmessungsgleicher zweiter Gehäusestutzen eines zugeordneten Ventils stoffschlüssig verbindbar, vorzugsweise anschweißbar. Dieser zweite Gehäusestutzen des Ventils ist dem Durchtrittsquerschnitt der Sitzfläche in der Verteilervorrichtung unmittelbar benachbart und er ist koaxial fluchtend zur jeweiligen Bohrungsachse der zugeordneten Anschlussöffnung ausgeführt.

In diesem Zusammenhang findet, wie dies weiterhin vorgesehen ist, ein Ventil Anwendung, welches ein Ventilgehäuse aufweist, das an seiner einem Ventilantrieb abgewandten Seite zur Umgebung hin offen ist und dort in dem vorstehend erwähnten zweiten Gehäusestutzen endet. Das Schließglied des Ventils greift durch eine von dem zweiten Gehäusestutzen gebildete Stutzenöffnung hindurch und findet seine Sitzfläche, wie vorstehend bereits im Zusammenhang mit dem erfindungswesentlichen Grundgedanken ausgeführt, im zugeordneten Gehäuseteil der Verteilervorrichtung.

Hinsichtlich der Anordnung von Ventilen am Linearkanal in Bezug auf Anordnungsvielfalt, Freiheitsgrade und Mindestabstände der angeschlossenen Ventile zueinander gelten die Ausführungen zum Ringkanal sinngemäß. Es ergeben sich hinsichtlich der Geometriebedingungen keinerlei Präferenzen für die eine oder die andere Bauform, es sei denn man würde die vorstehend angeführten räumlichen Gegebenheiten bzw. besonderen Strömungsverhältnisse beim Durchfluss dieser Bauformen ins Kalkül ziehen.

Die erfindungsgemäßen Verteilervorrichtungen besitzen in ihrem Endzustand keinerlei Dichtelemente mit Ausnahme der Schließglieder. Dies wird gemäß einem Vorschlag zur Herstellung dieser Verteilervorrichtungen dadurch erreicht, dass die Gehäuseteile, die weitestgehend identisch sind, als Vorprodukt vereinzelt hergestellt werden, vorzugsweise durch spanabhebende Bearbeitungsverfahren. Bei der ersten Verteilervorrichtung handelt es sich um ein einfaches rotationssymmetrisches Drehteil, bei der zweiten Verteilervorrichtung um ein einfaches Frästeil mit kubischer Grundform. In einem ersten Fügeverfahren (z.B. maschinelle orbitale Schweißung) wird das erste Gehäuse des Ringkanals aus dem ersten und dem zweiten Gehäuseteil stoffschlüssig gefügt. In gleicher Weise wird in einem ersten Fügeverfahren (z.B. maschinelle lineare Schweißung) das zweite Gehäuse des Linearkanals aus dem dritten und dem vierten Gehäuseteil stoffschlüssig gefügt. Anschließend werden, entsprechend den jeweiligen Anforderungen, in das erste bzw. das zweite Gehäuse die jeweiligen Anschlussöffnungen, die Sitzflächen sowie die Verteileranschlüsse spanabhebend eingebracht. Diese Geometrien können auf modernen. CNC-gesteuerten Bearbeitungszentren mit Bohr-, Dreh- und Fräswerkzeugen in einer Aufspannung hergestellt werden. Der möglichen Anordnungsvielfalt anzuschließender Ventile sind lediglich durch die einzuhaltenden Mindestabstände zwischen den Ventilen Grenzen gesetzt. In einem zweiten Fügeverfahren (z.B. maschinelle orbitale Schweißung) werden die Ventilgehäuse über ihren jeweiligen zweiten Gehäusestutzen mit dem jeweils zugeordneten ersten bzw. zweiten Verteileranschluss am Ringkanal oder mit dem jeweils zugeordneten dritten bzw. vierten Verteileranschluss am Linearkanal stoffschlüssig gefügt.

Die derart hergestellte Verteilereinheit, die aus dem ersten oder dem zweiten Gehäuse und den angeschlossenen Ventilgehäusen besteht, kann ohne Schwierigkeiten, wie dies vorgeschlagen wird, einem vielfach in der Pharmazie oder in der Biotechnologie geforderten Elektropolierverfahren unterzogen werden.

### KURZBESCHREIBUNG DER ZEICHNUNGEN

Jeweils ein Ausführungsbeispiel der beiden grundsätzlichen Bauformen der vorgeschlagenen Verteilervorrichtung gemäß der Erfindung ist in der Zeichnung dargestellt und wird nachfolgend beschrieben. Es zeigen
- **Figur 1**: in perspektivischer Darstellung eine bevorzugte Ausführungsform einer ersten Bauform der Verteilervorrichtung gemäß der Erfindung (im Folgenden erste Verteilervorrichtung genannt) mit insgesamt acht Ventilen einer an die erste Verteilervorrichtung gehäuseseitig speziell adaptierten Ventilbauform, wobei der Innenraum des Ringkanals zwischen zwei im Wesentlichen gleichen, in ihrer Ausgangsform als zylindrische Scheiben ausgebildeten Gehäuseteilen angeordnet ist;
- **Figur 2**: eine Draufsicht auf die erste Verteilervorrichtung gemäß **Figur 1****,** wobei die mit **Z1** gekennzeichnete erste Blickrichtung den Standpunkt des Beobachters für die aus **Figur 1** ersichtliche perspektivische Darstellung liefert;
- **Figur 3**: eine Ansicht der ersten Verteilervorrichtung gemäß **Figur 1** mit zwei ausschnittsweisen Darstellungen (linksseitiger Ausschnitt mit "**X**" gekennzeichnet) des ersten Ringkanals jeweils im Bereich einer zu einem Ventil führenden ersten Anschlussöffnung, wobei sich der jeweilige Schnitt aus dem in **Figur 2** mit **B-B** angegebenen Schnittverlauf ergibt;
- **Figur 4**: in vergrößerter Darstellung den Ausschnitt "**X**" gemäß **Figur 3****;**
- **Figur 5**: in perspektivischer Darstellung eine bevorzugte Ausführungsform einer zweiten Bauform der Verteilervorrichtung gemäß der Erfindung (im Folgenden zweite Verteilervorrichtung genannt) mit insgesamt acht Ventilen einer gleichfalls gehäuseseitig speziell adaptierten Ventilbauform, wobei der Innenraum in Form eines Linearkanals zwischen zwei im Wesentlichen gleichen, in ihrer Ausgangsform als prismatische Körper ausgebildeten Gehäuseteilen angeordnet ist;
- **Figur 6**: eine Draufsicht auf die zweite Verteilervorrichtung gemäß **Figur 5****,** wobei die mit **Z2** gekennzeichnete zweite Blickrichtung den Standpunkt des Beobachters für die aus **Figur 5** ersichtliche perspektivische Darstellung liefert;
- **Figur 7**: eine Ansicht der zweiten Verteilervorrichtung gemäß **Figur 5** mit zwei ausschnittsweisen Darstellungen (rechtsseitiger Ausschnitt mit "**X1**" und linksseitiger Ausschnitt mit "**X2**" gekennzeichnet) des Linearkanals jeweils im Bereich zweier benachbarter und einander gegenüberliegender Ventile, wobei der jeweilige Sitzbereich dieser benachbarten Ventile jeweils am Ende des Linearkanals gemäß einem in **Figur 6** mit **C-C** gekennzeichneten Schnittverlauf ausschnittsweise dargestellt ist;
- **Figur 8**: eine Seitenansicht der zweiten Verteilervorrichtung, ausgehend von ihrer Darstellung in den **Figuren 6** und **7****,** wobei der Sitzbereich eines unten liegenden Ventils entsprechend einem in **Figur 6** mit **F-F** gekennzeichneten Schnittverlauf dargestellt ist;
- **Figur 9**: in vergrößerter Darstellung den Ausschnitt "**X1**" gemäß **Figur 7****;**
- **Figur 10**: in vergrößerter Darstellung den Ausschnitt "**Y**" gemäß **Figur 8****;**
- **Figur 11**: im Schnitt ein an die erfindungsgemäße erste oder zweite Verteilervorrichtung speziell adaptiertes Absperrventil, das für sterile Anwendungen geeignet ist;
- **Figur 12a**: in schematischer Darstellung die Ansicht einer ausgewählten Anzahl erster Verteilervorrichtungen im Rahmen eines Verteilersystems, wobei die jeweiligen Verteilervorrichtungen unterschiedlich mit Ventilen konfiguriert sind;
- **Figur 12b**: in schematischer Darstellung das jeweilige Ventil-Konfigurationsschema oberhalb der Verteilervorrichtung, wobei sich die jeweilige oben liegende Ventil-Konfiguration aus einer Draufsicht auf die zugeordnete Verteilervorrichtung ergibt und
- **Figur 12c**: in schematischer Darstellung das jeweilige Ventil-Konfigurationsschema unterhalb der Verteilervorrichtung, wobei sich die jeweilige unten liegende Ventil-Konfiguration gleichfalls aus einer Draufsicht auf die zugeordnete Verteilervorrichtung ergibt.

### DETAILLIERTE BESCHREIBUNG

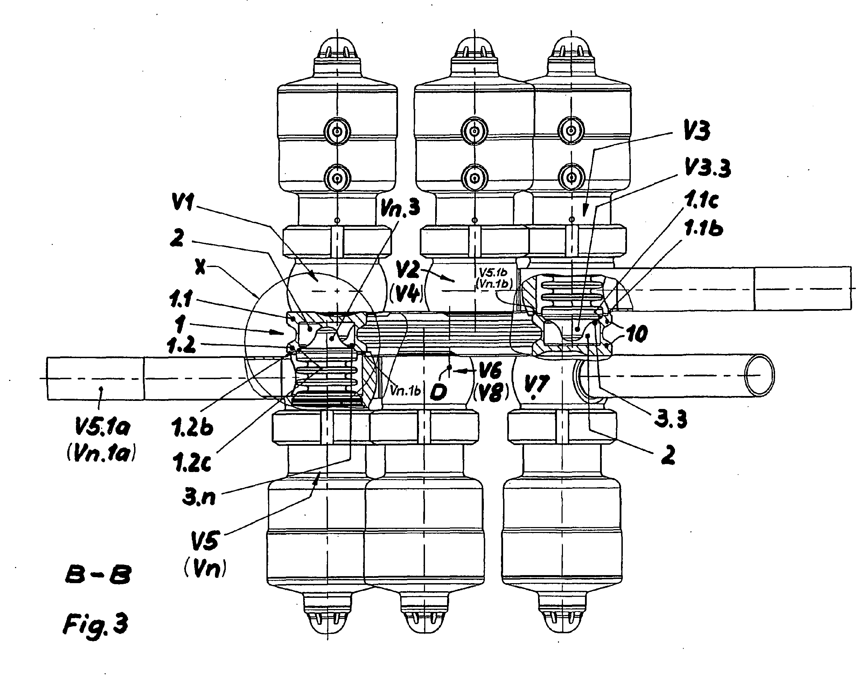

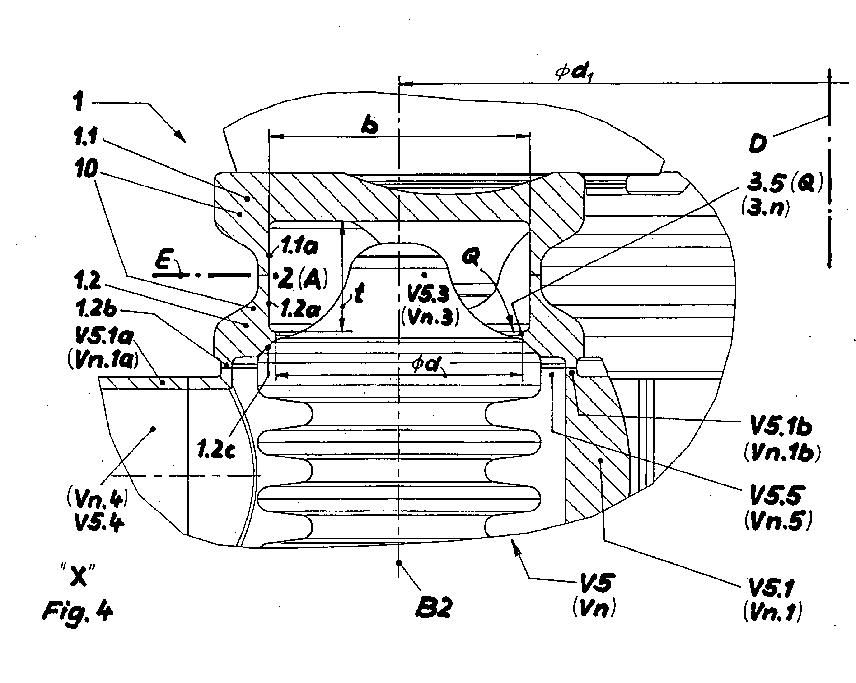

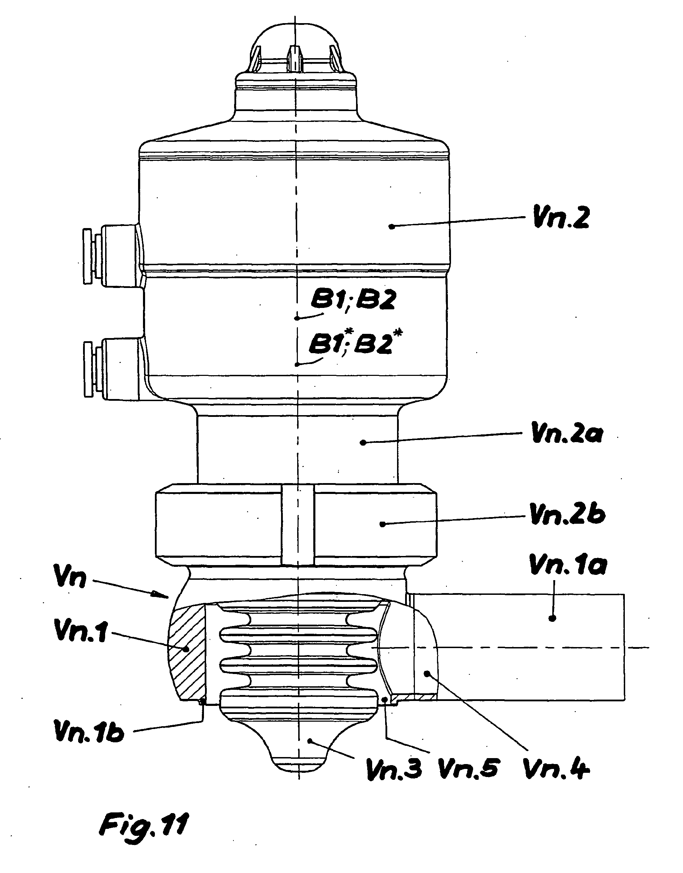

Eine erste Verteilervorrichtung 1 **(****Figuren 1** bis **4****)** weist ein erstes Gehäuse 10 auf, das sich aus einem ersten Gehäuseteil 1.1 und einem zweiten Gehäuseteil 1.2 zusammensetzt, wobei die beiden Gehäuseteile 1.1, 1.2 im Wesentlichen gleich und jeweils in ihrer Ausgangform als zylindrische Scheibe ausgebildet sind. Ventile, im folgenden Ventile V1 bis Vn genannt, die für sterile Anwendungen geeignet sind und im vorliegenden Fall eine speziell an die Verteilervorrichtung 1 adaptierte Bauform aufweisen (siehe **Figur 11****),** sind an den außenliegenden Stirnflächen der ersten Gehäuseteile 1.1, 1.2 über einen jeweiligen zweiten Gehäusestutzen Vn.1b befestigt (siehe auch **Figuren 3** und **4****).** Diese Befestigung ist stoffschlüssig, und sie wird bevorzugt als Schweißverbindung ausgeführt. Im Ausführungsbeispiel sind insgesamt acht Ventile V1 bis V8 an der ersten Verteilervorrichtung 1 angeordnet, wobei vier Ventile V1 bis V4 am ersten Gehäuseteil 1.1 oberhalb und vier Ventile V5 bis V8 am zweiten Gehäuseteil 1.2, in umgekehrter Lage zu jenen oberhalb der ersten Verteilervorrichtung 1, konfiguriert sind.

Jedes Ventil Vn weist im Außenbereich ein vorzugsweise kugelförmiges Ventilgehäuse Vn.1 **(****Figur 11****)** auf, dessen Innenraum bevorzugt zylindrisch ausgeführt ist und an seiner einem Ventilantrieb Vn.2 abgewandten Seite zur Umgebung hin offen ist und dort in dem zweiten Gehäusestutzen Vn.1 b endet. Dabei greift ein Schließglied Vn.3 durch eine von dem zweiten Gehäusestutzen Vn.1 b gebildete zweite Stutzenöffnung Vn.5 hindurch und findet seine zugeordnete erste Sitzfläche 1.1 c (siehe rechtsseitige ausschnittsweise Darstellung von **Figur 3****)** im ersten Gehäuseteil 1.1 bzw. seine zweite Sitzfläche 1.2c (siehe linksseitige ausschnittsweise Darstellung von **Figur 3** bzw. **Figur 4****)** im zweiten Gehäuseteil 1.2. Der Gehäusestutzen Vn.1 b des Ventils Vn ist durchmesser- und abmessungsgleich zu einem ersten oder zweiten Verteileranschluss 1.1b, 1.2b am zugeordneten ersten bzw. zweiten Gehäuseteil 1.1, 1.2 ausgeführt und jeweils mit diesem stoffschlüssig, vorzugsweise durch Schweißung, verbunden **(****Figuren 3****,** **4** und **11****).** Das Ventil Vn verfügt als sog. L-Ventil darüber hinaus über einen ersten Gehäusestutzen Vn.1a **(****Figur 11****),** der über seine erste Stutzenöffnung Vn.4 eine Verbindung zum Innenraum des Ventilgehäuses Vn.1 herstellt. Der Ventilantrieb Vn.2 ist über ein Latemengehäuse Vn.2a mittels einer Überwurfmutter Vn.2b mit dem Ventilgehäuse Vn.1 verbunden. Der Austausch des Schließgliedes Vn.3 gestaltet sich dadurch denkbar einfach, denn es wird lediglich die Überwurfmutter Vn.2b gelöst und das Schließglied Vn.3 lässt sich somit in Richtung des Ventilantriebs Vn.2 aus dem Ventilgehäuse Vn.1 ausbauen.

Der jeweilige erste Gehäusestutzen Vn.1a (V5.1a) **(****Figur 1****)** des Ventils Vn (V5) kann im Bezug auf die erste Verteilervorrichtung 1 so angeordnet werden, dass einerseits eine Kollision mit den benachbarten ersten Gehäusestutzen V6.1 a und V8.1 a vermieden wird und andererseits optimale Voraussetzungen für eine möglichst einfache Verrohrung innerhalb der Gesamtanordnung einer Anlage vorliegen. Dabei sind die ersten Gehäusestutzen Vn.1a längenmäßig so ausgeführt, dass der Anschluss von weiterführenden Rohrleitungen mit handelsüblichen maschinellen orbitalen Schweißvorrichtungen (z.B. orbitale Schweißkassetten) problemlos möglich ist.

Jedes Gehäuseteil 1.1, 1.2 **(****Figuren 4** und **3****)** weist eine erste bzw. zweite Kanalausnehmung 1.1 a, 1.2a auf, die in komplementärer Anordnung einen Innenraum in Form eines ersten Kanals 2 begrenzen. Dieser erste Kanal 2, ein in sich geschlossener und innerhalb der Gehäuseteile 1.1, 1.2 ausgebildeter Ringkanal 2, entsteht durch Rotation einer erzeugenden, ebenen ersten Fläche A um eine Drehachse D, die die Fläche A nicht schneidet. Im vorliegenden Falle handelt es sich um eine im Wesentlichen rechteckförmige erste Fläche A mit einer ersten Breite b und einer ersten Tiefe t. Dabei sind die Ecken der ersten Fläche A abgerundet, und die Drehachse D verläuft parallel zur kurzen Seite der ersten Fläche A, der ersten Tiefe t, und die Drehachse D hat einen Abstand vom Schwerpunkt der ersten Fläche A, der einem halben mittleren Durchmesser d₁ des Ringkanals 2 entspricht. Das erste und das zweite Gehäuseteil 1.1, 1.2 teilen die rechteckförmige erste Fläche A in einer ersten Teilungsebene E senkrecht zur Drehachse D mittig. Die Verbindung der beiden Gehäuseteile 1.1, 1.2 miteinander erfolgt an dieser Stelle beispielsweise durch maschinelles orbitales Schweißen von außen, wobei der Wurzelbereich ohne notwendige Nacharbeit einwandfrei durchgeschweißt werden kann.

Der Ringkanal 2 ist zum jeweils angeschlossenen Ventil Vn hin über eine erste Anschlussöffnung 3.n, im vorliegenden Falle die erste Anschlussöffnung 3.5 geöffnet **(****Figur 4****),** wobei eine jeweilige erste oder zweite Bohrungsachse B1, B2 (in **Figur 4** ist die zweite Bohrungsachse B2 dargstellt; erste Bohrungsachse B1 siehe **Figur 1****)** dieser kreisförmig ausgebildeten ersten Anschlussöffnung 3.n senkrecht auf der ersten Teilungsebene E steht. Durch diese vorteilhafte Anordnung durchdringt die jeweilige Bohrungsachse B1 bzw. B2 die lange Seite der erzeugenden ersten Fläche A, die Breite b, mittig. Dabei ist ein erster Durchtrittsquerschnitt Q der ersten oder zweiten Sitzfläche 1.1c, 1.2c, im Ausführungsbeispiel gemäß **Figur 4** handelt es sich um die zweite Sitzfläche 1.2c, kreisförmig ausgeführt und weist den gleichen Durchmesser auf, wie die zugeordnete erste Anschlussöffnung 3.1 bis 3.n. Im vorliegenden Falle handelt es sich um die erste Anschlussöffnung 3.5, die einen ersten Durchmesser d besitzt. Es ist ersichtlich, dass die erste und die zweite Sitzfläche 1.1c, 1.2c unmittelbar in die zugeordnete Anschlussöffnung 3.1 bis 3.n, im vorliegenden Falle die erste Anschlussöffnung 3.5, übergeht. Zur Sicherstellung einer totraumfreien, sumpf- und domfreien Ausgestaltung des Ringkanals 2 wird dessen erste Breite b etwa um den zweifachen Abrundungsradius der Ecken der erzeugenden ersten Fläche A größer als der Durchmesser d der jeweils in Frage kommenden ersten Anschlussöffnung 3.1 bis 3.n ausgeführt.

Aus der Anordnung gemäß **Figur 3** ist ersichtlich, dass die erste Anschlussöffnung 3.n über die zugeordnete Sitzfläche 1.1c, 1.2c jeweils in dem ersten Verteileranschluss 1.1 b, 1.2b endet, der an der jeweiligen Außenseite des ersten Gehäuseteils 1.1 oder des zweiten Gehäuseteils 1.2 ausgebildet ist. Einander gegenüberliegende Ventile Vn müssen dabei derart hinsichtlich ihrer Teilung innerhalb der ersten Verteilervorrichtung 1 angeordnet werden (siehe **Figur 2** in Verbindung mit **Figur 4****),** dass die zugeordneten Schließglieder Vn.3 nicht innerhalb des Ringkanals 2 miteinander kollidieren. Der Teilungsabstand der auf jeweils einer Seite an dem ersten oder zweiten Gehäuseteil 1.1, 1.2 angeordneten Ventile Vn ist determiniert durch den erforderlichen Mindestabstand, wie er durch die jeweiligen äußeren Abmessungen des Ventilantriebs Vn.2 vorgegeben ist. Es ist darüber hinaus ohne weiteres möglich, Ventile Vn unterschiedlicher Nennweite und demnach unterschiedlicher Abmessungsverhältnisse, soweit es die kritischen Abmessungen des Ventilantriebes Vn.2 betrifft, an der ersten Verteilervorrichtung 1 im Bedarfsfalle anzuordnen.

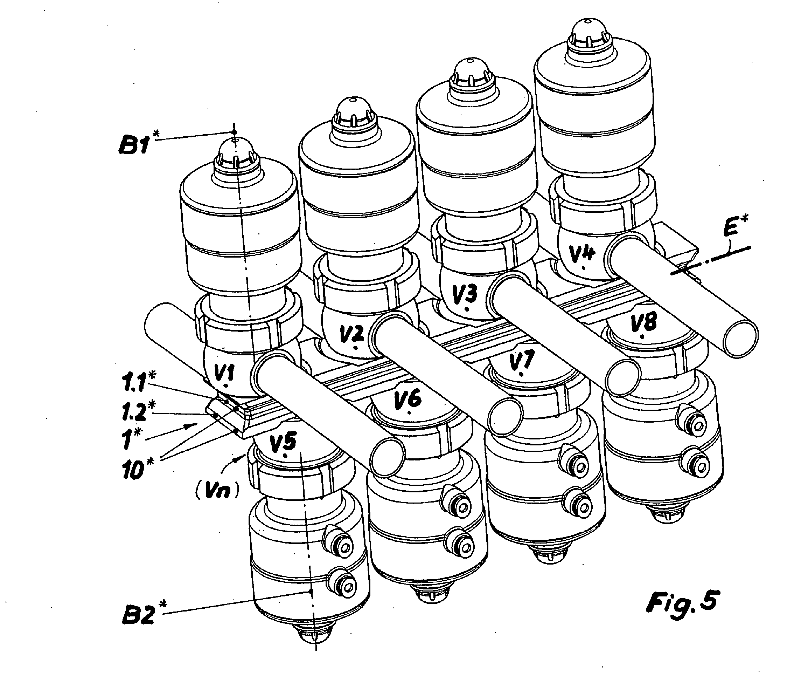

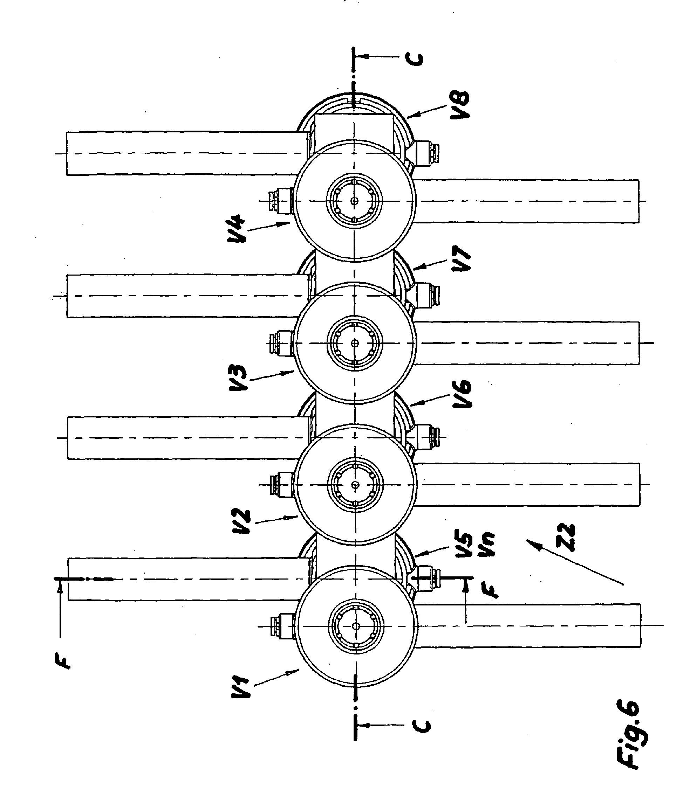

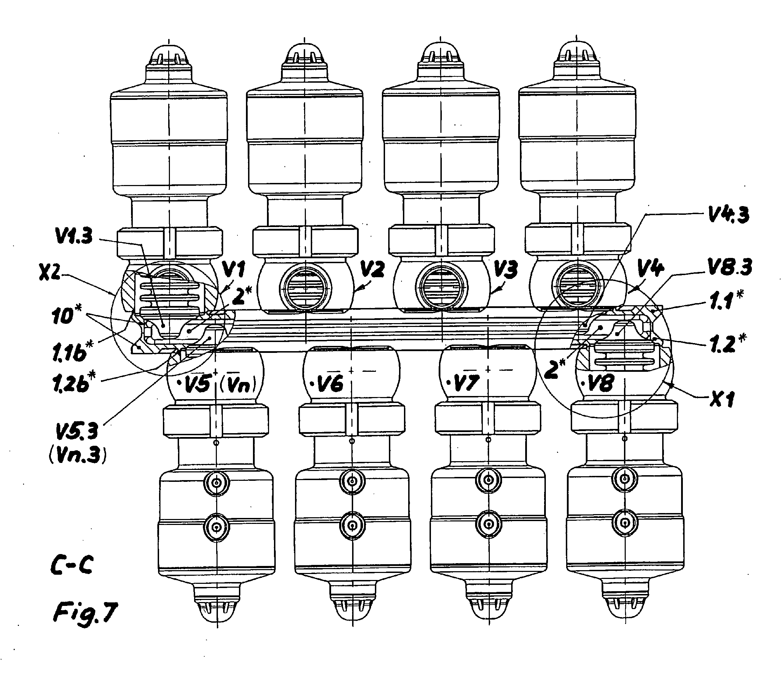

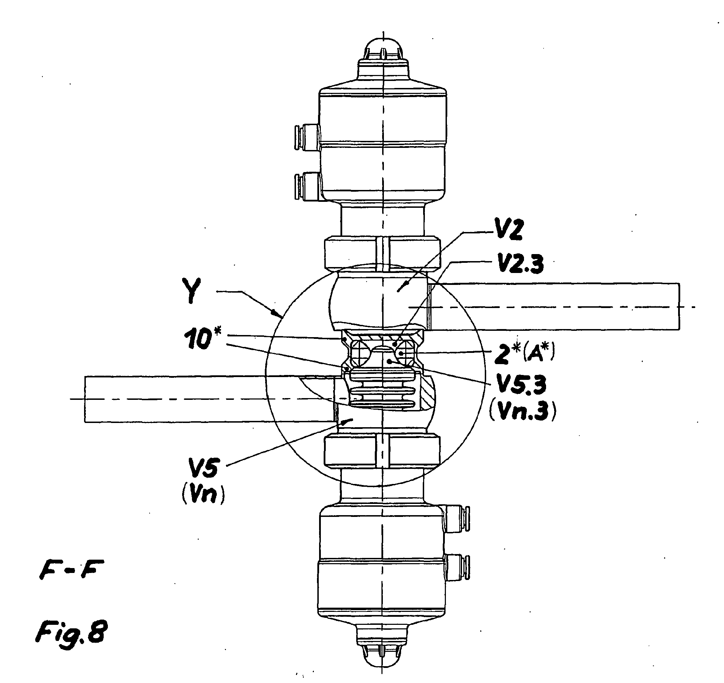

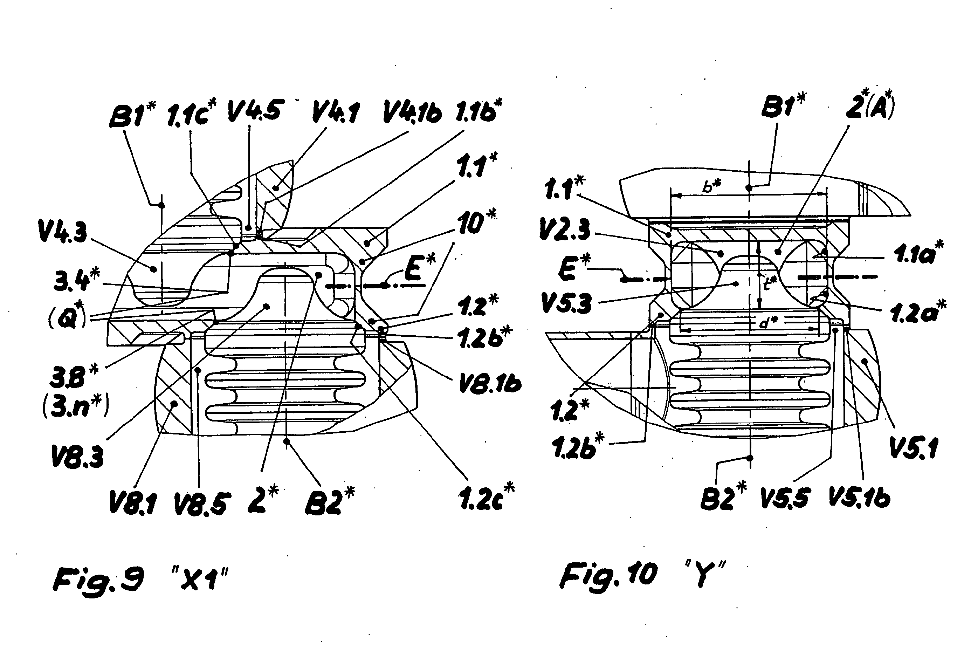

Eine zweite Verteilervorrichtung 1* **(****Figuren 5** bis **10****)** weist einen als Linearkanal ausgebildeten zweiten Kanal 2* auf **(****Figur 7****),** der durch Translation einer erzeugenden, ebenen zweiten Fläche A* senkrecht zu dieser Fläche entsteht **(****Figuren 8** und **10****).** Der Linearkanal 2* wird innerhalb eines zweiten Gehäuses 10* gebildet, das sich aus einem dritten Gehäuseteil 1.1* und einem vierten Gehäuseteil 1.2* zusammensetzt, wobei das dritte Gehäuseteil 1.1* eine dritte und das vierte Gehäuseteil 1.2* eine vierte Kanalausnehmung 1.1a* bzw. 1.2a* aufweist, die in komplementärer Anordnung den Linearkanal 2* begrenzen **(****Figur 10****).**

In **Figur 9** ist die Anordnung der Schließglieder V4.3 und V8.3 zweier benachbarter, einander gegenüberliegender Ventile V4 bzw. V8 dargestellt (s. hierzu auch **Figur 7****).** Der grundsätzliche Aufbau der Verteilergeometrie im Bereich einer den Schließgliedern V4.3 bzw. V8.3 zugeordneten jeweiligen dritten und vierten Sitzfläche 1.1c*, 1.2c* in Verbindung mit der zweiten Anschlussöffnung 3.4* bzw. 3.8* entspricht dem Aufbau, wie er hinsichtlich des Ringkanals 2 bereits beschrieben wurde. Dies betrifft die Verbindung der Ventilgehäuse V4.1 bzw. V8.1 über den jeweils zugeordneten dritten Verteileranschluss 1.1b* bzw. vierten Verteileranschluss 1.2b* ebenso, wie die Abmessungsverhältnisse (eine zweite Breite b* und eine zweite Tiefe t*) der erzeugenden, ebenen zweiten Fläche A* (s. hierzu auch **Figur 10****).** Auch beim Linearkanal 2* sind die Ecken der zweiten Fläche A* abgerundet und das dritte und das vierte Gehäuseteil 1.1*, 1.2* teilen die zweite Fläche A* in einer zweiten Teilungsebene E* mittig. Des Weiteren ist die Anordnung so getroffen, dass die zweite Teilungsebene E* senkrecht zur kurzen Seite der zweiten Fläche A*, der zweiten Tiefe t*, verläuft.

Hergestellt können die den Linearkanal 2 bildende dritte und vierte Kanalausnehmung 1.1a*, 1.2a* beispielsweise durch Ausfräsen, und die Verbindung der Gehäuseteile 1.1* und 1.2* miteinander erfolgt beispielsweise durch lineare Schweißung entlang der Stoßfuge der Gehäuseteile 1.1*, 1.2*, wobei es sich hierbei um lineare Schweißnähte am Umfang eines quaderförmigen Körpers handelt.

Auch beim Linearkanal 2* steht eine jeweilige dritte und vierte Bohrungsachse B1*, B2* **(****Figuren 9** und **10****)** jeweils senkrecht auf der zweiten Teilungsebene E*, und die jeweilige Bohrungsachse B1*, B2* durchdringt die lange Seite der zweiten Fläche A*, die zweite Breite b*, mittig. Auch bei dieser Ausführungsform ist ein zweiter Durchtrittsquerschnitt Q* der dritten und vierten Sitzfläche 1.1c*, 1.2c* kreisförmig ausgeführt und weist einen Durchmesser auf, wie die zugeordnete zweite Anschlussöffnung 3.1* bis 3.n*, die einen zweiten Durchmesser d* besitzt.

Auch wenn in der vorstehenden Beschreibung der in Form eines Ringkanals 2 ausgeführten ersten Verteilervorrichtung 1 und der in Form eines Linearkanals 2* ausgeführten zweiten Verteilervorrichtung 1* unterschiedliche Bezugszeichen Verwendung finden, die sich überwiegend nur durch die Anfügung eines Sterns (*) unterscheiden, so liegt es doch auf der Hand, dass die wesentlichen Abmessungen der beiden Ausführungsformen, soweit es den jeweiligen Kanalquerschnitt, den Sitzbereich und den Anschlussquerschnitt betrifft, gleich ausgeführt werden können. Darüber hinaus sind die vorstehenden Ausführungen zur Geometrie, zum Aufbau, der Funktion und den Vorteilen der als Ringkanal 2 ausgeführten Verteilervorrichtung 1 sinngemäß auch auf die als Linearkanal 2* ausgebildete zweite Verteilervorrichtung 1* übertragbar.

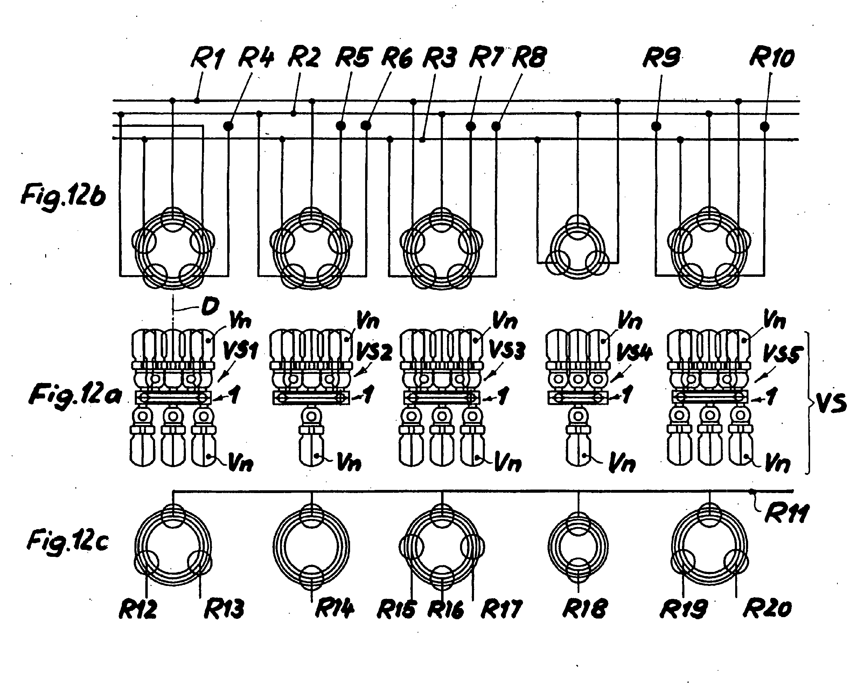

Zur Herstellung der erfindungsgemäßen Verteilervorrichtungen 1, 1* wird auf die vorstehenden Ausführungen verwiesen. Entscheidend ist in diesem Zusammenhang, dass die Verteilereinheiten, die jeweils aus dem ersten oder dem zweiten Gehäuse 10, 10* und den daran angeschlossenen Ventilgehäusen Vn.1 bestehen (s. **Figuren 1** bis **11****)**, jeweils mittels zweier Fügeverfahren hergestellt werden, die mit zeitlichem Abstand aufeinander folgen und zwischen denen eine spanabhebende Bearbeitung des ersten oder des zweiten Gehäuses 10, 10* stattfindet. Beim ersten Fügeverfahren werden die ersten und zweiten Gehäuseteile 1.1, 1.2 zu dem ersten Gehäuse 10 (z.B. maschinelle orbitale Schweißung) oder die dritten und vierten Gehäuseteile 1.1*, 1.2* zu dem zweiten Gehäuse 10* (z.B. maschinelle lineare Schweißung) stoffschlüssig gefügt. Anschließend werden, entsprechend den jeweiligen Anforderungen, in das erste bzw. das zweite Gehäuse 10, 10* die jeweiligen Anschlussöffnungen 3.1 bis 3.n bzw. 3.1* bis 3.n*, die Sitzflächen 1.1c, 1.2c bzw. 1.1c*, 1.2c* sowie die Verteileranschlüsse 1.1 b, 1.2b bzw. 1.1b*, 1.2b* spanabhebend eingebracht. In einem zweiten Fügeverfahren werden die Ventilgehäuse Vn.1 über ihren jeweiligen zweiten Gehäusestutzen Vn.1 b mit dem jeweils zugeordneten ersten bzw. zweiten Verteileranschluss 1.1b, 1.2b am Ringkanal 2 (z.B. maschinelle orbitale Schweißung) oder mit dem jeweils zugeordneten dritten bzw. vierten Verteileranschluss 1.1b*, 1.2b* am Linearkanal 2* (maschinelle lineare Schweißung) stoffschlüssig gefügt.
Ein Verteilersystem VS, das aus fünf Verteilervorrichtungen VS1 bis VS5 der vorstehend beschriebenen ersten Ausführungsform (erste Verteilervorrichtung 1) besteht **(****Figur 12a****),** verfügt in der an erster Stelle dargestellten Verteilervorrichtung VS1 über fünf Ventile Vn im oberen und drei erste Ventile Vn im unteren Bereich, in der an zweiter Stelle dargestellten Verteilervorrichtung VS2 gleichfalls über fünf Ventile Vn im oberen Bereich und zwei Ventile Vn im unteren Bereich, in der dritten Verteilervorrichtung VS3 ebenfalls wieder über fünf Ventile Vn im oberen Bereich und vier Ventile Vn im unteren Bereich, in der vierten Verteilervorrichtung VS4 über drei Ventile Vn im oberen Bereich und über zwei Ventile Vn im unteren Bereich und schließlich in der fünften Verteilervorrichtung VS5 über fünf Ventile Vn im oberen und drei Ventile Vn im unteren Bereich.

Ein derartiges Verteilersystem VS lässt sich nahezu beliebig erweitern. Die jeweiligen Ventile Vn finden, abhängig vom jeweiligen verfahrenstechnischen Prozess, den es mit dem vorliegenden Verteilersystem VS zu gestalten gilt, über ihre jeweiligen ersten Gehäusestutzen Vn.1 a, die in der schematischen Darstellung nicht gezeigt sind, Anschluss an eine der Rohrleitungen R1 bis R20. Ohne auf Einzelheiten des im Ausführungsbeispiel ausschnittsweise dargestellten Verteilersystems VS1 bis VS5 und den mit diesem darstellbaren verfahrenstechnischen Prozess einzugehen, sei lediglich festgestellt, dass beispielsweise jeweils ein Ventil Vn im unteren Bereich der jeweiligen Verteilervorrichtungen VS1 bis VS5 ein sog. Restentleerungsventil sein wird, das an eine gemeinsame Leitung, beispielsweise im vorliegenden Ausführungsbeispiel an die Rohrleitung R11, anzuschließen ist **(****Fig. 12c****).** Falls die Verteilervorrichtungen VS1 bis VS5 einer chemischen Reinigung unterzogen werden, was in der Regel der Fall sein wird, ist jeweils ein erstes Ventil Vn im oberen Bereich der jeweiligen Verteilervorrichtungen VS1 bis VS5 an eine Rohrleitung, im vorliegenden Falle beispielsweise die Rohrleitung R1, anzuschließen, wobei diese Rohrleitung beispielsweise Natronlauge führt **(****Fig. 12b****).** Aufgrund dieser Anordnung ist es beispielsweise möglich, ausgehend von der Rohrleitung R1, sämtliche Strömungspfade einer CIP-Reinigung zu unterziehen (CIP: cleaning in place). Ein Spülen, beispielsweise mit Wasser, oder ein Sterilisieren der Strömungspfade, beispielsweise mit Dampf geeigneter Temperatur, ist in entsprechender Weise möglich. Hierzu ist es lediglich erforderlich, dass jede Verteilervorrichtung VS1 bis VS5 an die jeweilige Leitung, die Spülwasser oder Dampf führt, angeschlossen ist.

### BEZUGSZEICHENLISTE DER VERWENDETEN ABKÜRZUNGEN

### Erste Ausführungsform

- 1: erste Verteilervorrichtung
- 10: erstes Gehäuse
- 1.1: erstes Gehäuseteil
- 1.1 a: erste Kanalausnehmung
- 1.1 b: erster Verteileranschluss
- 1.1 c: erste Sitzfläche
- 1.2: zweites Gehäuseteil
- 1.2a: zweite Kanalausnehmung
- 1.2b: zweiter Verteileranschluss
- 1.2c: zweite Sitzfläche
- 2: erster Kanal (Ringkanal)
- 3.1, 3.2, ... ... 3.n: erste Anschlussöffnung
- A: erzeugende, ebene erste Fläche
- B1: erste Bohrungsachse (= Symmetrieachse des Schließgliedes Vn.3)
- B2: zweite Bohrungsachse (= Symmetrieachse wie vor)
- D: Drehachse
- E: erste Teilungsebene
- Q: erster Durchtrittsquerschnitt
- b: erste Breite (Ringkanal)
- d: erster Durchmesser der ersten Anschlussöffnung 3.1 bis 3.n
- d₁: mittlerer Durchmesser des Ringkanals
- t: erste Tiefe (Ringkanal)

### Zweite Ausführungsform

- 1*: zweite Verteilervorrichtung
- 10*: zweites Gehäuse
- 1.1*: drittes Gehäuseteil
- 1.1a*: dritte Kanalausnehmung
- 1.1b*: dritter Verteileranschluss
- 1.1c*: dritte Sitzfläche
- 1.2*: viertes Gehäuseteil
- 1.2a*: vierte Kanalausnehmung
- 1.2b*: vierter Verteileranschluss
- 1.2c*: vierte Sitzfläche
- 3.1*, 3.2*, ... ... 3.n*: zweite Anschlussöffnung
- 2*: zweiter Kanal (Linearkanal)
- A*: erzeugende, ebene zweite Fläche
- B1*: dritte Bohrungsachse (= Symmetrieachse des Schließgliedes Vn.3)
- B2*: vierte Bohrungsachse (= Symmetrieachse wie vor)
- E*: zweite Teilungsebene
- Q*: zweiter Durchtrittsquerschnitt
- b*: zweite Breite (Linearkanal)
- d*: zweiter Durchmesser der zweiten Anschlussöffnung 3.1* bis 3.n*
- t*: zweite Tiefe (Linearkanal)

### Ventil

- V1, V2, ... ... Vn: Ventil
- Vn.1: Ventilgehäuse
- Vn.1a: erster Gehäusestutzen
- Vn.1b: zweiter Gehäusestutzen
- Vn.2: Ventilantrieb
- Vn.2a: Latemengehäuse
- Vn.2b: Überwurfmutter
- Vn.3: Schließglied
- Vn.4: erste Stutzenöffnung
- Vn.5: zweite Stutzenöffnung

### Verteilersystem

- VS: Verteilersystem
- VS1, VS2, ..., VS5 ...: erste Verteilervorrichtung
- R1, R2, ... ..., R20: Rohrleitung

## Patentansprüche

1. Verteilervorrichtung (1; 1*) zum Anschluss von mindestens zwei Ventilen (V1, V2, ..., Vn), in denen jeweils ein translatorisch verschiebbares Schließglied (V1.3, V2.3, ..., Vn.3) vorgesehen ist, das eine Sitzfläche (1.1c, 1.2c; 1.1c*, 1.2c*) mit einem Durchtrittsquerschnitt (Q) schaltet, mit einem Innenraum (2; 2*) in einem Gehäuse (10; 10*) der Verteilervorrichtung (1; 1*), derAnschlussöffnungen (3.1, 3.2, ..., 3.n; 3.1*, 3.2*, ..., 3.n*) aufweist, die jeweils den Innenraum (2; 2*) mit dem jeweiligen Durchtrittsquerschnitt (Q) des zugeordneten, angeschlossenen Ventils (V1, V2, ..., Vn) verbinden, wobei die Anschlussöffnungen (3.1, 3.2, ..., 3.n; 3.1*, 3.2*, ..., 3.n*) an bestimmten Stellen der Erstreckungslänge und des Umfangs des Gehäuses (10; 10*) angeordnet sind, wobei die Sitzfläche (1.1c, 1.2c; 1.1c*, 1.2c*) am Gehäuse (10; 10*) ausgebildet ist und unmittelbar in die zugeordnete Anschlussöffnung (3.1, 3.2, ..., 3.n; 3.1*, 3.2*, ..., 3.n*) übergeht, und wobei ein Ventilgehäuse (V1.1, V2.1, ..., Vn.1) des jeweils angeschlossenen Ventils (V1, V2, ..., Vn) mit dem Gehäuse (10; 10*) stoffschlüssig verbunden ist,
**dadurch gekennzeichnet,**
• **dass** das Gehäuse (10; 10*) aus zwei Gehäuseteilen (1.1, 1.2; 1.1 *, 1.2*) besteht, von denen sich jedes zwischen zwei ebenen, parallelen Flächen erstreckt,
• **dass** jeder Gehäuseteil (1.1, 1.2; 1.1*, 1.2*) eine Kanalausnehmung (1.1a, 1.2a; 1.1a*, 1.2a*) aufweist, diese jeweils zu einer ebenen Fläche, in der sich der Gehäuseteil (1.1, 1.2; 1.1*, 1.2*) erstreckt, offen ist und die Kanalausnehmung (1.1 a, 1.2a; 1.1a*, 1.2a*) in komplementärer Anordnung den Innenraum (2; 2*) in Form eines ersten oder zweiten Kanals geschlossenen Querschnitts begrenzen,
• **dass** die Gehäuseteile (1.1, 1.2; 1.1*, 1.2*) an ihren den geschlossenen Querschnitt des ersten oder zweiten Kanals (2; 2*) gemeinsam bildenden Stellen stoffschlüssig miteinander verbunden sind,
• und **dass** die Anschlussöffnungen (3.1, 3.2, ..., 3.n; 3.1*, 3.2*, ..., 3.n*) an einer stirnseitigen Außenseite des jeweiligen Gehäuseteils (1.1, 1.2; 1.1*, 1.2*) angeordnet sind, wobei die jeweilige Außenseite von den stoffschlüssigen Verbindungsstellen der Gehäuseteile (1.1, 1.2; 1.1*, 1.2*) parallel beabstandet ist.

2. Verteilervorrichtung nach Anspruch 1,
**dadurch gekennzeichnet,**
**dass** der erste Kanal (2) als in sich geschlossener Ringkanal ausgebildet ist, der durch Rotation einer erzeugenden, ebenen ersten Fläche (A) um eine Drehachse (D) entsteht, die die Fläche (A) nicht schneidet.

3. Verteilervorrichtung nach Anspruch 2,
**dadurch gekennzeichnet,**
**dass** die erste Fläche (A) im Wesentlichen rechteckförmig ist mit einer ersten Breite (b) und einer ersten Tiefe (t).

4. Verteilervorrichtung nach Anspruch 3,
**dadurch gekennzeichnet,**
**dass** die Ecken der ersten Fläche (A) abgerundet sind.

5. Verteilervorrichtung nach Anspruch 3 oder 4,
**dadurch gekennzeichnet,**
**dass** die Drehachse (D) parallel zur kurzen Seite der ersten Fläche (A), der ersten Tiefe (t), verläuft und einen Abstand vom Schwerpunkt der ersten Fläche (A) hat, der einen halben mittleren Durchmesser (d₁) des Ringkanals (2) entspricht.

6. Verteilervorrichtung nach einem der Ansprüche 2 bis 5,
**dadurch gekennzeichnet,**
**dass** das erste und das zweite Gehäuseteil (1.1, 1.2) die erste Fläche (A) in einer ersten Teilungsebene (E) senkrecht zur Drehachse (D) mittig teilen.

7. Verteilervorrichtung nach Anspruch 1,
**dadurch gekennzeichnet,**
**dass** der zweite Kanal (2*) als Linearkanal ausgebildet ist, der durch Translation einer erzeugenden, ebenen zweiten Fläche (A*) senkrecht zu dieser Fläche entsteht.

8. Verteilervorrichtung nach Anspruch 7,
**dadurch gekennzeichnet,**
**dass** die zweite Fläche (A*) im Wesentlichen rechteckförmig ist mit einer zweiten Breite (b*) und einer zweiten Tiefe (t*).

9. Verteilervorrichtung nach Anspruch 8,
**dadurch gekennzeichnet,**
**dass** die Ecken der zweiten Fläche (A*) abgerundet sind.

10. Verteilervorrichtung nach einem der Ansprüche 7 bis 9,
**dadurch gekennzeichnet,**
**dass** das dritte und das vierte Gehäuseteil (1.1*, 1.2*) die zweite Fläche (A*) in einer zweiten Teilungsebene (E*) mittig teilen.

11. Verteilervorrichtung nach Anspruch 10,
**dadurch gekennzeichnet,**
**dass** die zweite Teilungsebene (E*) senkrecht zur kurzen Seite der zweiten Fläche (A*), der zweiten Tiefe (t*), verläuft.

12. Verteilervorrichtung nach einem der Ansprüche 1 bis 11,
**dadurch gekennzeichnet,**
**dass** die stoffschlüssige Verbindung der Gehäuseteile (1.1, 1.2; 1.1*, 1.2*) durch Schweißung erfolgt.

13. Verteilervorrichtung nach einem der Ansprüche 1 bis 12,
**dadurch gekennzeichnet,**
**dass** die jeweilige Bohrungsachse (B1, B2; B1*, B2*) der kreisförmig ausgebildeten Anschlussöffnung (3.1, 3.2, ..., 3.n; 3.1*, 3.2*, ..., 3.n*) senkrecht auf der Teilungsebene (E; E*) steht.

14. Verteilervorrichtung nach Anspruch 13,
**dadurch gekennzeichnet,**
**dass** die jeweilige Bohrungsachse (B1, B2; B1*, B2*) die lange Seite der Fläche (A; A*), die Breite (b; b*), mittig durchdringt.

15. Verteilervorrichtung nach einem der Ansprüche 1 bis 14,
**dadurch gekennzeichnet,**
**dass** der Durchtrittsquerschnitt (Q) der Sitzfläche (1.1c, 1.2c; 1.1c*, 1.2c*) kreisförmig ausgeführt ist und den gleichen Durchmesser aufweist, wie die zugeordnete Anschlussöffnung (3.1, 3.2, ..., 3.n; 3.1*, 3.2*, ..., 3.n*), die einen Durchmesser (d; d*) besitzt.

16. Verteilervorrichtung nach Anspruch 15,
**dadurch gekennzeichnet,**
**dass** die Breite (b; b*) etwa um den zweifachen Abrundungsradius der Ecken der Fläche (A; A*) größer als der Durchmesser (d; d*) ausgeführt ist.

17. Verteilervorrichtung nach einem der Ansprüche 1 bis 16,
**dadurch gekennzeichnet,**
**dass** die Anschlussöffnung (3.1, 3.2, ..., 3.n; 3.1*, 3.2*, ..., 3.n*) über die zugeordnete Sitzfläche (1.1c, 1.2c; 1.1c*, 1.2c*) jeweils in einem Verteileranschluss (1.1b, 1.2b; 1.1b*, 1.2b*) endet, ausgebildet an der jeweiligen Außenseite des ersten Gehäuseteils (1.1) oder des zweiten Gehäuseteils (1.2) bzw. des dritten Gehäuseteils (1.1*) oder des vierten Gehäuseteils (1.2*).

18. Verteilervorrichtung nach Anspruch 17,
**dadurch gekennzeichnet,**
**dass** das Ventil (V1, V2, ..., Vn) ein Ventilgehäuse (V1.1, V2.1, ..., Vn.1) aufweist, welches an seiner einem Ventilantrieb (V1.2, V2.2, ..., Vn.2) abgewandten Seite zur Umgebung hin offen ist und dort in einem zweiten Gehäusestutzen (V1.1b, V2.1b, ..., Vn.1b) endet, wobei das Schließglied (V1.3, V2.3, ..., Vn.3) durch eine von dem zweiten Gehäusestutzen (V1.1b, V2.1b, ..., Vn.1b) gebildete zweite Stutzenöffnung (V1.5, V2.5, ..., Vn.5) hindurchgreift, dass der Gehäusestutzen (V1.1 b, V2.1b, ..., Vn.1 b) durchmesser- und abmessungsgleich zum Verteileranschluss (1.1b, 1.2b; 1.1b*, 1.2b*) ausgeführt ist und dass der Gehäusestutzen (V1.1b, V2.1 b, ..., Vn.1b) und der zugeordnete Verteileranschluss (1.1b, 1.2b; 1.1b*, 1.2b*) miteinander stoffschlüssig verbunden sind.

19. Herstellung einer Verteilervorrichtung nach einem der Ansprüche 1 bis 18,
**dadurch gekennzeichnet,**
• **dass** die Gehäuseteile (1.1, 1.2 oder 1.1*, 1.2*) als Vorprodukt vereinzelt hergestellt werden,
• **dass** in einem ersten Fügeverfahren (z.B. maschinelle orbitale oder lineare Schweißung) das erste Gehäuse (10) des Ringkanals (2) aus dem ersten und dem zweiten Gehäuseteil (1.1, 1.2) oder das zweite Gehäuse (10*) des Linearkanals (10*) aus dem dritten und dem vierten Gehäuseteil (1.1*, 1.2*) stoffschlüssig gefügt wird,
• **dass** anschließend, entsprechend den jeweiligen Anforderungen, die ersten Anschlussöffnungen (3.1, 3.2, ..., 3.n), die ersten und zweiten Sitzflächen (1.1 c, 1.2c) sowie die ersten und die zweiten Verteileranschlüsse (1.1b, 1.2b) spanabhebend jeweils in das erste Gehäuse (10) oder die zweiten Anschlussöffnungen (3.1*, 3.2*, ..., 3.n*), die dritten und vierten Sitzflächen (1.1c*, 1.2c*) sowie die dritten und vierten Verteileranschlüsse (1.1b*, 1.2b*) spanabhebend jeweils in das zweite Gehäuse (10*) eingebracht werden und
• **dass** in einem zweiten Fügeverfahren (z.B. maschinelle orbitale Schweißung) die Ventilgehäuse (Vn.1) über ihren jeweiligen zweiten Gehäusestutzen (Vn.1 b) mit dem jeweils zugeordneten ersten bzw. zweiten Verteileranschluss (1.1b, 1.2b) oder dem jeweils zugeordneten dritten bzw. vierten Verteileranschluss (1.1b*, 1.2b*) stoffschlüssig gefügt werden.

20. Herstellung einer Verteilervorrichtung nach Anspruch 19,
**dadurch gekennzeichnet,**
**dass** eine Verteilereinheit (10, V1.1., V2.1, ..., Vn.1; 10*, V1.1., V2.1, ..., Vn.1), bestehend aus dem ersten Gehäuse (10) und den mit diesem verbundenen Ventilgehäusen (V1.1., V2.1, ..., Vn.1) oder dem zweiten Gehäuse (10*) und den mit diesem verbundenen Ventilgehäusen (V1.1., V2.1, ..., Vn.1), einem Elektropolierverfahren unterzogen wird.

## Claims

1. A distributor device (1; 1*) for the connection of at least two valves (V1, V2,...,Vn), in each of which there is provided a respective translatorily displaceable closing member (V1.3, V2.3,...,Vn.3) which switches a seat surface (1.1c, 1.2c; 1.1c*, 1.2c*) with a through-flow cross-section (Q), having an internal chamber (2; 2*) in a housing (10; 10*) of the distributor device (1; 1*), which has connecting openings (3.1, 3.2,...,3.n; 3.1*, 3.2*,...,3.n*) which respectively connect the internal chamber (2; 2*) to the respective through-flow cross-section (Q) of the associated connected valve (V1, V2,...,Vn), wherein the connecting openings (3.1, 3.2,...,3.n; 3.1*, 3.2*,...,3.n*) are arranged at given locations in the length in which the housing (10; 10*) extends and in the periphery thereof, wherein the seat surface (1.1c, 1.2c; 1.1c*, 1.2c*) is provided on the housing (10; 10*) and goes directly into the associated connecting opening (3.1, 3.2,...,3.n; 3.1*, 3.2*,...,3.n*), and wherein a valve housing (V1.1, V2.1,...,Vn.1) of the respectively connected valve (V1, V2,...,Vn) is connected to the housing (10; 10*) in a connection involving intimate joining of the materials concerned,
**characterised in that**
- the housing (10; 10*) comprises two housing portions (1.1, 1.2; 1,1*, 1,2*), each of which extends between two flat parallel surfaces,
- each housing portion (1.1, 1.2; 1.1*, 1.2*) has a passage opening (1.1a, 1.2a; 1.1a*, 1.2a*) which is respectively open to a flat surface in which the housing portion (1.1, 1.2; 1.1*, 1.2*) extends and the passage opening (1.1a, 1.2a; 1.1a*, 1.2a*) in a complementary arrangement define the internal chamber (2; 2*) in the form of a first or second passage of closed cross-section,
- the housing portions (1.1, 1.2; 1.1*, 1.2*) are connected together in a connection involving intimate joining of the materials concerned at their locations jointly forming the closed cross-section of the first or second passage (2; 2*), and
- the connecting openings (3.1, 3.2,...,3.n; 3.1*, 3.2*,...,3.n*) are arranged at an end outside of the respective housing portion (1.1, 1.2; 1.1*, 1.2*), wherein the respective outside is spaced in parallel relationship from the connecting locations, involving intimate joining of the materials concerned, of the housing portions (1.1, 1.2; 1.1*, 1.2*).

2. A distributor device according to claim 1 **characterised in that** the first passage (2) is in the form of a ring passage which is closed in itself and which is produced by rotation of a generating flat first surface (A) about an axis of rotation (D) which does not intersect the surface (A).

3. A distributor device according to claim 2 **characterised in that** the first surface (A) is substantially rectangular with a first width (b) and a first depth (t).

4. A distributor device according to claim 3 **characterised in that** the corners of the first surface (A) are rounded.

5. A distributor device according to claim 3 or claim 4 **characterised in that** the axis of rotation (D) extends parallel to the short side of the first surface (A), the first depth (t), and is at a spacing from the centroid of the first surface (A), which corresponds to half a mean diameter (d₁) of the ring passage (2).

6. A distributor device according to one of claims 2 to 5 **characterised in that** the first and second housing portions (1.1, 1.2) centrally divide the first surface (A) in a first division plane (E) perpendicularly to the axis of rotation (D).

7. A distributor device according to claim 1 **characterised in that** the second passage (2*) is in the form of a linear passage which is afforded by translation of a generating flat second surface (A*) perpendicularly to said surface.

8. A distributor device according to claim 7 **characterised in that** the second surface (A*) is substantially rectangular with a second width (b*) and a second depth (t*).

9. A distributor device according to claim 9 **characterised in that** the corners of the second surface (A*) are rounded.

10. A distributor device according to one of claims 7 to 9 **characterised in that** the third and the fourth housing portions (1,1*, 1.2*) centrally divide the second surface (A*) in a second division plane (E*).

11. A distributor device according to claim 10 **characterised in that** the second division plane (E*) extends perpendicularly to the short side of the second surface (A*), the second depth (t*).

12. A distributor device according to one of claims 1 to 11 **characterised in that** the connection between the housing portions (1.1, 1.2; 1.1*, 1.2*) involving intimate joining of the materials concerned is effected by welding.

13. A distributor device according to one of claims 1 to 12 **characterised in that** the respective bore axis (B1, B2; B1*, B2*) of the circular connecting opening (3.1, 3.2,...,3.n; 3.1*, 3.2*,...,3.n*) is perpendicular to the division plane (E; E*).

14. A distributor device according to claim 13 **characterised in that** the respective bore axis (B1, B2; B1*, B2*) passes centrally through the long side of the surface (A; A*), the width (b; b*).

15. A distributor device according to one of claims 1 to 14 **characterised in that** the through-flow cross-section (Q) of the seat surface (1.1c, 1.2c; 1.1c*, 1.2c*) is circular and is of the same diameter as the associated connecting opening (3.1, 3.2,...,3.n; 3.1*, 3.2*,...,3.n*) which is of a diameter (d; d*).

16. A distributor device according to claim 15 **characterised in that** the width (b; b*) is larger than the diameter (d; d*) approximately by double the radius at which the corners of the surface (A; A*) are rounded.

17. A distributor device according to one of claims 1 to 16 **characterised in that** the connecting opening (3.1, 3.2,...,3.n; 3.1*, 3.2*,...,3.n*) ends over the associated seat surface (1.1c, 1.2c; 1.1c*, 1.2c*) in a respective distributor connection (1.1b, 1.2b; 1.1b*, 1.2b*), provided at the respective outside of the first housing portion (1.1) or the second housing portion (1.2), or the third housing portion (1.1*) or the fourth housing portion (1.2*) respectively.

18. A distributor device according to claim 17 **characterised in that** the valve (V1, V2,...,Vn) has a valve housing (V1.1, V2.1,...,Vn.1) which is open to the ambient atmosphere at its side remote from the valve drive (V1.2, V2.2,...,Vn.2) and there ends in a second housing connection (V1.1b, V2.1b,...,Vn.1b), wherein the closing member (V1.3, V2.3,...,Vn.3) engages through a second connection opening (V1.5, V2.5,...,Vn.5) formed by the second housing connection (V1.1b, V2,1b,...,Vn.1b), that the housing connection (V1.1b, V2.1b,...,Vn.1b) is equal in diameter and dimension to the distributor connection (1.1b, 1.2b; 1.1b*, 1.2b*) and that the housing connection (V1.1b, V2.1b,...,Vn.1b), and the associated distributor connection (1.1b, 1.2b; 1.1b*, 1.2b*) are connected together involving intimate joining of the materials concerned.

19. Production of a distributor device according to one of claims 1 to 18 **characterised in that**
- the housing portions (1.1, 1.2 or 1.1*, 1.2*) are produced separately as a preliminary product,
- in a first joining process (for example machine orbital or linear welding) the first housing (10) of the ring passage (2) comprising the first and the second housing portions (1.1, 1.2) or the second housing (10*) of the linear passage (10*) comprising the third and the fourth housing portions (1.1*, 1.2*) are joined involving intimate joining of the materials concerned,
- then in accordance with the respective requirements the first connecting openings (3.1, 3.2,...,3.n), the first and second seat surfaces (1.1c, 1.2c) and the first and second distributor connections (1.1b, 1.2b) are produced by cutting machining respectively in the first housing (10) or the second connecting openings (3.1*, 3.2*,...,3.n*), the third and fourth seat surfaces (1.1c*, 1.2c*) and the third and fourth distributor connections (1.1b*, 1.2b*) are produced by cutting machining respectively in the second housing (10*), and
- in a second joining process (for example machine orbital welding) the valve housings (Vn.1) are joined involving intimate joining of the materials concerned by way of their respective second housing connections (Vn.1b) to the respectively associated first and second distributor connections (1.1b, 1.2b) respectively or the respectively associated third and fourth distributor connections (1.1b*, 1.2b*) respectively.

20. Production of a distributor device according to claim 19 **characterised in that** a distributor unit (10, V1.1, V2.1,...,Vn.1; 10*, V1.1, V2.1,...,Vn.1) comprising the first housing (10) and the valve housings (V1.1, V2.1,...,Vn.1) connected thereto or the second housing (10*) and the valve housings (V1.1, V2.1,...,Vn.1) connected thereto is subjected to an electropolishing process.

## Revendications

1. Dispositif de distribution (1 ; 1*) pour le raccordement d'au moins deux soupapes (V1, V2, ..., Vn), dans lesquelles respectivement un organe de fermeture (V1.3, V2.3, ..., Vn.3) coulissant en translation est prévu, lequel active une surface de siège (1.1c, 1.2c ; 1.1c*, 1.2c*) avec une section transversale de passage (Q), avec un espace intérieur (2 ; 2*) dans un boîtier (10 ; 10*) du dispositif de distribution (1 ; 1*), qui présente des ouvertures de raccordement (3.1, 3.2, ..., 3.n : 3.1*, 3.2*, ..., 3.n*) qui relient respectivement l'espace intérieur (2 ; 2*) à la section transversale de passage (Q) correspondant de la soupape (V1, V2, ..., Vn) raccordée associée, les ouvertures de raccordement (3.1, 3.2, ..., 3.n ; 3.1*, 3.2*, ..., 3.n*) étant disposées à des endroits déterminés de la longueur d'extension et du pourtour du boîtier (10 ; 10*), la surface de siège (1.1c, 1.2c ; 1.1c*, 1.2c*) étant formée sur le boîtier (10 ; 10*) et passant directement dans l'ouverture de raccordement (3.1, 3.2, ..., 3.n ; 3.1*, 3.2*, ..., 3.n*) associée, et un boîtier (V1.1, V2.1, ..., Vn.1) de la soupape (V1, V2, ..., Vn) raccordée respectivement étant relié par de la matière au boîtier (10 ; 10*), **caractérisé en ce que**
- le boîtier (10 ; 10*) se compose de deux parties de boîtier (1.1, 1.2 ; 1.1*, 1.2*), dont chacune s'étend entre deux surfaces parallèles planes,
- chaque partie de boîtier (1.1, 1.2 ; 1.1*, 1.2*) présente un renoncement de canal (1.1a, 1.2a ; 1,1a*, 1.2a*), celui-ci étant ouvert respectivement jusqu'à une surface plane, dans laquelle s'étend la partie de boîtier (1.1, 1.2 ; 1.1*, 1.2*) et le renfoncement de canal (1.1a, 1.2a ; 1.1a*, 1.2a*) délimite l'espace intérieur (2 ; 2*) de façon complémentaire sous la forme d'un premier ou second canal de section transversale fermée,
- les parties de boîtier (1.1, 1.2 ; 1.1*, 1.2*) sont reliées entre elles par de la matière aux endroits formant en commun la section transversale fermée du premier ou second canal (2 ; 2*),
- les ouvertures de raccordement (3.1, 3.2, ..., 3.n ; 3.1*, 3.2*, ..., 3.n*) sont disposées sur une face extérieure frontale de chaque partie de boîtier (1.1_{,} 1.2 ; 1.1*, 1.2*), la face extérieure respective étant espacée en parallèle des points de jonction par de la matière des parties de boîtier (1.1, 1.2 ; 1.1*, 1.2*).

2. Dispositif de distribution selon la revendication 1,
**caractérisé en ce**
**que** le premier canal (2) est formé comme un canal annulaire fermé en soi, qui apparaît par rotation d'une première surface (A) plane, produite autour d'un axe de rotation (D), qui ne coupe pas la surface (A).

3. Dispositif de distribution selon la revendication 2,
**caractérisé en ce**
**que** la première surface (A) est essentiellement rectangulaire avec une première largeur (b) et une première profondeur (t).

4. Dispositif de distribution selon la revendication 3,
**caractérisé en ce**
**que** les coins de la première surface (A) sont arrondis.

5. Dispositif de distribution selon la revendication 3 ou 4,
**caractérisé en ce**
**que** l'axe de rotation (D) s'étend parallèlement au petit côté de la première surface (A), de la première profondeur (t) et présente une distance par rapport au centre de gravité de la première surface (A) qui correspond à un demi diamètre (d₁) moyen du canal annulaire (2).

6. Dispositif de distribution selon l'une quelconque des revendications 2 à 5,
**caractérisé en ce**
**que** la première et la deuxième parties de boîtier (1.1, 1.2) séparent au centre la première surface (A) dans un premier plan de séparation (E) perpendiculairement à l'axe de rotation (D).

7. Dispositif de distribution selon la revendication 1,
**caractérisé en ce**
**que** le second canal (2*) est formé comme un canal linéaire qui apparaît par translation d'une seconde surface (A*) plane, engendrée, perpendiculairement à cette surface.

8. Dispositif de distribution selon la revendication 7,
**caractérisé en ce**
**que** la seconde surface (A*) est essentiellement rectangulaire avec une seconde largeur (b*) et une seconde profondeur (t*).

9. Dispositif de distribution selon la revendication 8,
**caractérisé en ce**
**que** les coins de la seconde surface (A*) sont arrondis.

10. Dispositif de distribution selon l'une quelconque des revendications 7 à 9,
**caractérisé en ce**
**que** la troisième et la quatrième parties de boîtier (1.1*, 1.2*) séparent au centre la seconde surface (A*) dans un second plan de séparation (E*).

11. Dispositif de distribution selon la revendication 10,
**caractérisé en ce**
**que** le second plan de séparation (E*) s'étend perpendiculairement au petit côté de la seconde surface (A*), c'est à dire à la seconde profondeur (t*).

12. Dispositif de distribution selon l'une quelconque des revendications 1 à 11,
**caractérisé en ce**
**que** le lien de matière entre les parties de boîtier (1.1, 1.2 ; 1.1*, 1.2*) est effectuée par soudage.

13. Dispositif de distribution selon la revendication 1 à 12,
**caractérisé en ce**
**que** l'axe de perçage (B1, B2 ; B1*, B2*) respectif de l'ouverture de raccordement (3.1, 3.2, ..., 3.n ; 3.1*, 3.2*, ..., 3.n*) réalisée sous forme circulaire est perpendiculaire au plan de séparation (E ; E*).

14. Dispositif de distribution selon la revendication 13,
**caractérisé en ce**
**que** l'axe de perçage (B1, B2 ; B1*, B2*) respectif traverse au centre le grand côté de la surface (A ; A*), c'est à dire la largeur (b ; b*).

15. Dispositif de distribution selon l'une quelconque des revendications 1 à 14,
**caractérisé en ce**
**que** la section transversale de passage (Q) de la surface de siège (1.1c, 1.2c ; 1.1c*, 1.2c*) est réalisée sous forme circulaire et présente le même diamètre que l'ouverture de raccordement (3.1, 3.2, ..., 3.n ; 3.1*, 3.2*, ..., 3.n*) associée qui possède un diamètre (d ; d*).

16. Dispositif de distribution selon la revendication 15,
**caractérisé en ce**
**que** la largeur (b, b*) est plus grande que le diamètre (d ; d*), d'à peu près deux fois le rayon de congé des coins de la surface (A ; A*).

17. Dispositif de distribution selon l'une quelconque des revendications 1 à 16,
**caractérisé en ce**
**que** l'ouverture de raccordement (3.1, 3.2, ..., 3.n ; 3.1*, 3.2*, ..., 3.n*) se termine au delà de la surface de siège (1.1c, 1.2c ; 1.1c*, 1.2c*) associée correspondante dans un raccordement de distribution (1.1b, 1.2b ; 1.1b*, 1.2b*), réalisée sur la face extérieure respective de la première partie de boîtier (1.1) ou de la deuxième partie de boîtier (1.2) ou de la troisième partie de boîtier (1.1*) ou de la quatrième partie de boîtier (1.2*).

18. Dispositif de distribution selon la revendication 17,
**caractérisé en ce**
**que** la soupape (V1, V2, ..., Vn) présente un boîtier de soupape (V1.1, V2.1, ..., Vn.1), lequel est ouvert sur sa face éloignée d'un entraînement de soupape (V1.2, V2.2, ..., Vn.2) vers l'extérieur et, s'y termine dans une seconde tubulure de boîtier (V1.1b, V2.1b, ..., Vn.1b), l'organe de fermeture (V1.3, V2.3, ..., Vn.3) traversant une seconde ouverture de tubulure (V1.5, V2.5, ..., Vn.5) formée par la seconde tubulure de boîtier (V1.1b, V2.1b, ..., Vn.1b), en ce que la tubulure de boîtier (V1.1b, V2.1b, ..., Vn.1b) présente le même diamètre et les mêmes dimensions que le raccordement de distribution (1.1b, 1.2b ; 1.1b*, 1.2b*) et en ce que la tubulure de boîtier (V1.1b, V2.1b, ..., Vn.1b) et le raccordement de distribution (1.1b, 1.2b ; 1.1b*, 1.2b*) associé sont reliés par de la matière.

19. Fabrication d'un dispositif de distribution selon l'une quelconque des revendications 1 à 18,
**caractérisée en ce que**
- les parties de boîtier (1.1, 1.2 ou 1.1*, 1.2*) sont fabriquées individuellement comme un avant-produit,
- dans un premier procédé d'assemblage (par exemple soudage orbital ou linéaire mécanisé), le premier boîtier (10) du canal annulaire (2) est assemblé en reliant avec de la matière de la première et la deuxième parties de boîtier (1.1, 1.2) ou le second boîtier (10*) du canal linéaire (10*) est assemblé en reliant avec de la matière de la troisième et la quatrième parties de boîtier (1.1*, 1.2*),
- ensuite, selon les exigences respectives, les premières ouvertures de raccordement (3.1, 3.2, ..., 3.n), les premières et les deuxièmes surfaces de siège (1.1c, 1.2c) ainsi que les premiers et les seconds raccordements de distribution (1.1b, 1.2b) sont obtenus par usinage respectivement du premier boîtier (10), ou les deuxièmes ouvertures de raccordement (3.1*, 3.2*, ..., 3.n*), les troisièmes et les quatrièmes surfaces de siège (1.1c*, 1.2c*) ainsi que les troisièmes et les quatrièmes raccordements de distribution (1.1b*, 1.2b*) sont obtenus par usinage respectivement du second boîtier (10*) et
- dans un second procédé d'assemblage (par exemple soudage orbital mécanisé), le boîtier de soupape (Vn.1) est assemblé par un lien de matière au delà de sa seconde tubulure de boîtier (Vn.1b) respective au premier ou deuxième raccordement de distribution (1.1b, 1.2b) associé respectivement ou au troisième ou quatrième raccordement de distribution (1.1b*, 1.2b*) associé respectivement.

20. Fabrication d'un dispositif de distribution selon la revendication 19,
**caractérisée en ce**
**qu'**une unité de distribution (10, V1.1, V2.1, ..., Vn.1 ; 10*, V1.1, V2.1, ..., Vn.1) se composant du premier boîtier (10) et des boîtiers de soupape (V1.1, V2.1, ..., Vn.1) reliés à celui-ci ou du second boîtier (10*) et des boîtiers de soupape ((V1.1, V2.1, ..., Vn.1) reliés à celui-ci, est soumise à un procédé d'électropolissage.
